(19) Europäisches Patentamt
European Patent Office
Office européen des brevets

(11) EP 1 901 921 B1

(12) **EUROPEAN PATENT SPECIFICATION**

(45) Date of publication and mention of the grant of the patent:
**24.02.2010 Bulletin 2010/08**

(21) Application number: **06773425.1**

(22) Date of filing: **16.06.2006**

(51) Int Cl.:
***B32B 27/32*** *(2006.01)* ***B32B 27/10*** *(2006.01)*

(86) International application number:
**PCT/US2006/023614**

(87) International publication number:
**WO 2006/138642 (28.12.2006 Gazette 2006/52)**

(54) **FOAM-PAPERBOARD LAMINATES, ARTICLES INCORPORATING SAME AND METHODS OF MAKING THE SAME**

SCHAUMSTOFF-PAPP-LAMINATE, DIESE ENTHALTENDE ARTIKEL UND HERSTELLUNGSVERFAHREN DAFÜR

STRATIFIES DE CARTON ALVEOLAIRE, ARTICLES CONTENANT CES STRATIFIES ET PROCEDES DE FABRICATION CORRESPONDANTS

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.06.2005 US 691404 P**
**04.08.2005 US 705605 P**

(43) Date of publication of application:
**26.03.2008 Bulletin 2008/13**

(73) Proprietor: **Dixie Consumer Products LLC**
**Atlanta, Georgia 30348-5605 (US)**

(72) Inventors:
- **SHEHADEH, Rana**
  **Georgia 30306 (US)**
- **SWIONTEK, Anthony, J.**
  **Wisconsin 54956 (US)**
- **ANDERSON, Gregory, J.**
  **Wisconsin 54914 (US)**
- **SWOBODA, Dean, P.**
  **Wisconsin 54115 (US)**

(74) Representative: **Grünecker, Kinkeldey, Stockmair & Schwanhäusser**
**Anwaltssozietät**
**Leopoldstrasse 4**
**80802 München (DE)**

(56) References cited:
**US-A- 4 435 344** **US-A- 6 142 331**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 901 921 B1

## Description

### Cross-Reference to Related Applications

This application claims priority to U.S. Provisional Application Nos. 60/691,404, filed June 17, 2005 and 60/705,605, filed August 4, 2005.

### Field of the Invention

The present invention relates to foam-paperboard laminates prepared using an *in situ* foaming process. The foam-paperboard laminates of the present invention are formed by extruding LDPE polymer onto a moisture-containing paperboard to provide a LDPE-coated paperboard material. Upon heating of the LDPE-coated paperboard, the moisture in the paperboard causes steam to act as a blowing agent for the LDPE and a LDPE foam is obtained. The foam is adhered by way of physical adhesion of the polymer to the paperboard. The foam-paperboard laminates of the present invention exhibit insulating and cushioning properties. The foam-paperboard laminates are suitable for use in, for example, insulated beverage cups, food service containers, packaging materials, and in other products where insulating and/or cushioning laminate materials can be useful.

### Background of the Invention

Foam-paperboard laminates prepared using *in situ* foaming processes are known for use in insulated beverage cups that are sold commercially as PerfecTouch® by the assignee of the present invention. The basic technology used to prepare the foam surface of the cups is disclosed in U.S. Patent No. 4,435,344 to Iioka.

To make this product, generally, the beverage cup is fabricated to include a bottom panel and a sidewall, both of which are made of paperboard material. Prior to application of the bottom panel, LDPE is extruded to one surface of the sidewall material. A blend of LDPE and HDPE is extruded to the other side of the sidewall material. Foaming of the LDPE-coated outer sidewall surface is carried out *in situ* by placing the unfoamed beverage cup in an oven and heating it above the melting point of the outer LDPE coating. The moisture within the paperboard causes steam to form and, since steam occupies more volume than liquid water, pressure is created, thus providing a foaming action on the LDPE-coated outer cup surface. The HDPE/LDPE layer on the inside of the cup prevents steam from escaping toward the interior of the beverage cup to result in preferential foaming of the outer layer. Cups made in this manner exhibit superior insulating properties, especially with respect to hot liquids such as coffee, tea, and the like. The cups are also suitably used for cold beverages. ,

Refinements in the manufacturing of the *in situ* foaming process are disclosed in U.S. Patent No. 5,993,705 to Grishchenko et al. In the '705 patent, containers are conveyed through an oven on a conveyor to cause a foamable material on the container to foam and become a heat insulative layer. The containers are supported on respective holders of the conveyor which prevent the containers from contacting one another while the outer coatings on the container walls are foamed. See also U.S. Patent No. 6,328,557 to Grishchenko et al.

While PerfecTouch insulated cups have been manufactured for a number of years, recently this product has experienced significantly increased demand. In attempting to meet this demand, it was determined that using existing processes and materials, suitable foam qualities could not be obtained using web speeds of greater than about 91 m/min (300 feet per minute).

US 6,142,331 discloses a method for making a container from a foam-paperboard laminate. A brim forming region of a body member link comprises a notched area so that the curled brim does not bond to the sidewall of the container in the range of the notched area.

It was thus determined that it would be desirable to develop improved methods to conduct an *in situ* foaming process more efficiently. Still further, it was determined that it would be desirable to obtain suitable foam quality using less polymer than was possible using previous processes and materials.

According to the present invention, it is suggested to provide a method having the features of independent claim 1, as well as a LDPE foam-paperboard laminate having the features of independent claim 16.

The present invention meets said objectives, as well as others.

### Summary of the Invention

In one aspect, the present invention provides foam-paperboard laminates prepared from LDPE having a MI of greater than 8 to about 20 g/10 min, as measured by ASTM 1298. Further, the foam aspect of the foam-paperboard laminates of the present invention may be prepared by one or more methods of reducing the orientation of an extruded LDPE coated on the paperboard. The foam is obtained by first extruding the LDPE onto the paperboard to provide a LDPE-coated paperboard material. The material is then heated to provide steam release from the paperboard. The steam operates as a blowing agent and causes the LDPE to foam *in situ*. Upon completion of the foaming process, the LDPE foam is physically adhered to the paperboard to provide a foam-paperboard laminate. The foam-paperboard laminates of the present invention are suitable for use in insulated beverage cups, packaging materials, as well as many other products. Using LDPE as specified herein, it has been found possible to manufacture foam-paperboard laminates at significantly higher speeds than previously allowable. Moreover, the characteristics of the foam prepared in accordance with the present invention are significantly improved over foams prepared using prior art methods.

Additional advantages of the invention will be set forth in part in the description that follows, and in part will be obvious from the description, or may be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

## Brief Description of the Drawings

The invention is described in detail below with reference to the Figures, wherein like numbers designate similar parts and wherein:

**Figure 1** is a schematic view in elevation and section of an insulated beverage cup prepared from a foam-paperboard laminate of the present invention;

**Figure 1a** is a detail of the insulated beverage cup of **Figure 1** showing the various layers schematically in the area where the bottom panel is joined to the paperboard sidewall.

**Figure 2** is a schematic diagram illustrating coating of paperboard with a LDPE using a slit die apparatus.

**Figure 2a** is a schematic view of a foam-paperboard laminate in accordance with an aspect of the present invention comprising an occlusive layer on an interior side, and a LDPE foam layer on the other side.

**Figure 3** is a photomicrograph in section of a foam-paperboard laminate where LDPE having a melt index of 5.7 g/10 min was applied to the paperboard at a web speed of 61 m/min (200 ft/min).

**Figure 4** is a photomicrograph in section of a foam-paperboard laminate where LDPE having a MI of 5.7 g/10 min was applied to the paperboard at a web speed of 137 m/min (450 ft/min), where the extrusion conditions were not optimized.

**Figure 5** is a photomicrograph in section of a foam-paperboard laminate where LDPE having a MI of 5.7 g/10 min was applied to the paperboard web speed of 61 m/min (200 ft/min.)

**Figure 6** is a photomicrograph in section of a foam-paperboard laminate where LDPE having a MI of 5.7 g/10 min was applied to the paperboard at a web speed of 137 m/min (450 ft/min) where the extrusion conditions were not optimized.

**Figure 7** is a plot of polymer foam caliper versus coat weight in g/m$^2$ (pounds/ream) of LDPE after foaming for 5.7 MI LDPE for various melt temperatures and extrusion speeds.

**Figure 8** is a plot of polymer foam caliper versus coat weight in g/m$^2$ (pounds/ream) of LDPE after foaming for 5.7 MI LDPE for various melt temperatures at an extrusion speed of 91 m/min (300 fpm).

**Figure 9** is a plot of polymer foam caliper versus coat weight in g/m$^2$ (pounds/ream) of LDPE after foaming for 5.7 MI LDPE for various melt temperatures at an extrusion speed of 137 m/min (450 fpm).

**Figure 10** is a plot of polymer foam caliper versus coat weight in g/m$^2$ (pounds/ream) of LDPE after foaming for 5.7 MI for various extrusion speeds.

**Figure 11** is a plot of polymer foam caliper versus coat weight in g/m$^2$ (pounds/ream) of LDPE after foaming for 5.7 MI LDPE at various extrusion speeds.

**Figure 12** is a plot of polymer foam caliper versus coat weight in g/m$^2$ (pounds/ream) of LDPE after foaming for 4.5 MI LDPE at various extrusion speeds.

**Figure 13** is a plot of polymer foam caliper versus coat weight in g/m$^2$ (pounds/ream) of LDPE after foaming for 12.0 MI LDPE at various extrusion speeds.

**Figure 14** is a plot of average polymer foam caliper in $\mu$m (mils) versus LDPE melt index for various MI LDPE at a web speed of 91 m/min (300 fpm).

**Figure 15A** is a photomicrograph of a foam-paperboard laminate produced from 5.7 MI LDPE at a web speed of 137 m/min (450 feet per minute) using a 1016 $\mu$m (40 mil) die gap and 12.7 cm (5") air gap.

**Figure 15B** is a further view of the foam-paperboard laminate of **Figure 15A.**

**Figure 16A** is a photomicrograph of a foam-paperboard laminate produced from 5.7 MI LDPE at a web speed of 137 m/min (450 feet per minute) using a 508 $\mu$m (20 mil) die gap and 22.9 cm (9") air gap.

**Figure 16B** is a further view of the foam-paperboard laminate of **Figure 16A**.

**Figure 17A** is a photomicrograph of a foam-paperboard laminate produced from 5.7 MI LDPE at a web speed of 137 m/min (450 feet per minute) using a 508 μm (20 mil) die gap, 33 cm (13") air gap and a coat weight of 35.8 g/$m^2$ (22 pounds per ream).

Figure 17B is a further view of the foam-paperboard laminate of **Figure 17A**.

**Figure 18A** is a photomicrograph of a foam-paperboard laminate produced from 13.7 MI LDPE at a web speed of 137 m/min (450 feet per minute) using a 506 μm (20 mil) die gap, 33 cm (13") air gap and a coat weight of 39.1 g/$m^2$ (24 pounds per ream).

**Figure 18B** is a further view of the foam-paperboard laminate of **Figure 18A**.

**Figure 19A** is a photomicrograph of a foam-paperboard laminate produced from 4.5 MI LDPE at a web speed of 137 m/min (450 feet per minute) using a 508 μm (20 mil) die gap, 22.9 cm (9") air gap and a coat weight of 35.8 g/$m^2$ (22 pounds per ream).

**Figure 19B** is a further view of the foam-paperboard laminate of **Figure 19A**.

**Figure 19A** is a photomicrograph of a foam-paperboard laminate produced from 12.0 MI LDPE at a web speed of 137 m/min (450 feet per minute) using a 508 μm (20 mil) die gap, 33 cm (13") air gap and a coat weight of 42.3 g/$m^2$ (26 pounds per ream).

**Figure 20B** is a further view of the foam-paperboard laminate of **Figure 20A.**

**Figures 21A** and **21B** are laser-scanned surface images of various foam-paperboard laminates. **Figures 22A** and **22B** are angular plots of isotropy for the samples of **Figures 21A** and **21B.**

**Figure 23** is a plot of polymer foam caliper for 13.7 MI LDPE at various melt temperatures and extrusion speeds at an air gap of 27.9 cm (11") and a die gap of 508 μm (20 mils).

**Figure 24** is a plot of polymer foam caliper for various MI LDPE at various extrusion speeds.

**Figure 25** is a plot of polymer foam caliper for 5.7 MI LDPE at various oven temperatures and residence times.

**Figure 26** is a plot of polymer foam caliper for 12.0 MI LDPE at various oven temperature and residence times.

**Figure 27** is a plot of polymer foam caliper for 13.7 MI LDPE at various oven temperatures and residence times.

**Figure 28** is a plot of polymer foam caliper for 5.7 MI LDPE at various oven temperatures and residence times, where the oven temperatures are higher than those in **Figure 25**.

**Figure 29** is a plot of polymer foam caliper for 12.0 MI LDPE at various oven temperatures and residence times, where the oven temperatures are higher than those in **Figure 26**.

**Figure 30** is a plot of polymer foam caliper for 13.7 MI LDPE at various oven temperatures and residence times, where the oven temperatures are higher than those in **Figure 27**.

**Figure 31** is a comparison of polymer foam caliper visual characteristics and caliper for 12.0 MI LDPE at various oven temperatures and residence times.

## Detailed Description of the Invention

The present invention may be understood more readily by reference to the following detailed description of the invention and the examples provided herein. Before the present invention is disclosed and described, it is to be understood that the aspects described below are not limited to specific methods or material discussed, as such may, of course, vary. It is also to be understood that the terminology used herein is for the purpose of describing particular aspects only and is not intended to be limiting.

As used herein terminology has its ordinary meaning. Exemplary definitions as to terminology used in this patent are given below.

Often, ranges are expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Melt index" is measured according to ASTM 1298 and has the units g/10 mins. For brevity, melt index may be abbreviated herein as "MI." The stated melt index may also be presented without the units; however, it should be understood that when presented without units, the stated melt index has the units g/10 mins and the melt index is measured in accordance with ASTM 1298.

"Melt temperature" refers to the temperature at the extrusion die used to apply a coating to paperboard.

"Per ream" means per 278.71 $m^2$ (3000 square feet) of paperboard, which is a common measurement used by one of ordinary skill in the art.

Unless otherwise specified, an ASTM test method referred to means the version in effect as of June 1, 2005 unless specifically stated otherwise.

Foam thickness of a foam-paperboard laminates is determined by measuring overall caliper of a foam-paperboard laminates. As used herein, the foam thickness is presented as a total thickness (in μm (in mils)) of the foam layer, the paperboard layer and the occlusive layer on the inner surface of the paperboard. The paperboard used for all examples herein was about 381 μm (15 mils) The thickness of the occlusive layer was negligible. Accordingly, a thickness reported as, for example, about 635 μm (25 mils), will have a paperboard thickness of about 381 μm (15 mils) and a LDPE thickness of about 254 μm (10 mils). Overall caliper is generally measured on at least 5 locations on a sample and averaged.

"LDPE" means "Low Density Polyethylene." LDPE is also known as "high pressure polyethylene" because it is typically produced at pressures ranging from 82 - 276 MPA (800-2725atm). LDPE is generally produced in either a tubular or stirred autoclave reactor. Traditionally, LDPE has been defined as a homo-polymer having a density from about 0.915 and 0.940 g/cm$^3$; however comonomers are sometimes used in LDPE products (products having a density above 0.940 g/cm$^3$ are considered HYPE).

HDPE means "High Density Polyethylene." HDPE is defined by ASTM D 1248-84 as a product of ethylene polymerization with a density of 0.940 g/cm$^3$ or higher. This range includes both homo-polymers of ethylene and its copolymers with small amounts of alpha-olefins.

Further information concerning polyethylene polymers may be found in the Kirk-Othmer Encyclopedia of Chemical Technology, 4th edition, Volumes 17 and 19 (Wiley 1996).

"Mils" means thousandths of an inch.

"SEM" means scanning electron micrograph.

"FPM" means feet per minute.

As would be recognized by one of ordinary skill in the art, foam-paperboard laminates not made using an *in situ* process are generally made by first foaming LDPE to provide a foam structure. This foam structure is then separately adhered, such as with an adhesive, to the paperboard to provide a laminate. Such foaming uses a traditional blowing agent, such as a gas (*e.g.* a hydrocarbon gas or $CO_2$) or chemical blowing agent to prepare the foam. Significantly more control of the foaming process is found with such a foam manufacturing method.

In contrast, the primary mechanism for producing foam in an *in situ* process is the creation of steam by way of evaporation of water from the paperboard. This *in situ* method has been found by the inventors herein to require a careful balance between LDPE properties, the extruded coating properties and the paperboard properties to provide a foam-paperboard laminates having a satisfactory foam as discussed further herein where the foam is suitably adhered to the surface of the paperboard without application of a separate adhesive.

In order to prepare the foam aspect of the foam-paperboard laminate of the present invention, LDPE is extruded onto a paperboard material having a certain amount of moisture therein. The foam-paperboard laminate is then placed into an oven or other type of heating system. During heating, the polymer softens and the moisture in the paperboard turns into steam. The steam causes the LDPE coating to soften and the steam acts as a blowing agent to deform the LDPE coating to provide foam cells.

The inventors herein have determined that the properties of the LDPE suitable to provide satisfactory foam formation are significantly different from the properties required for general applications of extruded LDPE coated paperboard structures, such as those used in packaging applications. In particular, the inventors herein have determined that the properties of the extruded LDPE coating are highly significant to obtaining satisfactory LDPE foams. The properties of the LDPE coating in the present invention are determined by the properties of the LDPE itself, and also by processing parameters as discussed further herein.

As noted previously, the assignee of the present invention has manufactured insulated beverage cups using an *in situ* foaming process for some time. However, when sales volume for this product increased recently, considerable difficulty was experienced in obtaining higher volumes of foam-paperboard laminates that are the major component of the insulated beverage cups. Initial attempts to increase the volume of cups manufactured were somewhat unsuccessful. That is, when the extrusion speed was increased while keeping all other variables the same (*e.g.* LDPE MI, extrusion parameters, oven temperature etc.), unsatisfactory product quality resulted. Through experimentation, which is described herein in detail, it was determined that the polymeric properties needed to obtain satisfactory LDPE foam properties did not match the properties understood to result in good extruded LDPE coatings.

As would be understood by one of ordinary skill in the art, low melt index LDPE polymers are used to prepare extruded coatings; higher melt index polymers, which are generally "softer" polymers and exhibit better flow properties, are used for injection molding applications. One of ordinary skill in the art would normally not seek to use a higher melt index polymer for extrusion coating because the resulting coating would be thought to be too soft to provide an article with useful properties.

While the foam-paperboard laminates of the present invention incorporate an extruded LDPE polymer coating, further processing of this extruded coating is necessary to provide the foam aspect of the foam-paperboard laminates. Prior art would thus dictate that a lower melt index polymer should be used to prepare an extruded LDPE coating. However, when run at high extrusion speeds (which was necessary to meet the increased volume for insulated beverage cups), low melt index LDPE did not provide suitable foaming. The resulting foam, for example, exhibited low aspect ratio and poor adhesion.

The investigation conducted by the inventors herein showed that the properties desired to provide a good extrusion coating had to be balanced with polymer properties to provide suitable foam. These properties were further influenced by the limitations of the *in situ* foaming process, in which the blowing agent effectiveness is a function of the amount of moisture in the board. The adhesion of the extruded coating during and after the foaming process was also relevant to the resulting foam quality, which added an additional variable to the objective of obtaining good results. Put simply, the inventors herein determined that there were multiple variables that affected the ability to obtain foam-paperboard laminates as described and claimed herein.

The present invention provides foam-paperboard laminates prepared using an *in situ* foaming process. Generally, in this process, a LDPE polymer is extruded onto a paperboard material having a suitable amount of moisture to provide an LDPE-coated paperboard material. This material is then placed into an oven, whereby the moisture in the paperboard turns to steam. This steam then acts as a blowing agent for the LDPE to provide LDPE foam. Upon completion of the foaming process, the foam is adhered to the paperboard surface to provide the foam-paperboard laminates of the present invention.

The inventors herein have found that in order to obtain the foam-paperboard laminates of the present invention, the extruded LDPE coating must comprise a coating that is "soft" enough to provide foam with a suitable aspect ratio. After foaming, the extruded LDPE foam must also be suitably adhered to the paperboard surface to provide good foam quality.

It has been surprisingly determined that when the foam-paperboard laminates of the present invention are prepared from an extruded LDPE as discussed herein, along with a paperboard material having a suitable amount of moisture included therein, the inventive foam-paperboard laminates can be obtained using significantly higher speed operations than that possible previously. Moreover, the foam aspect of the foam-paperboard laminates of the present invention is of a better quality and consistency than obtainable using the prior art *in situ* foaming process disclosed in U.S. Patent No. 4,435,344. The improved quality of the foam obtained herein allows the foam-paperboard laminates to provide better insulation properties. Further, the laminate surface is more consistent in appearance and quality. The foam-paperboard laminates of the present invention are therefore more aesthetically pleasing than foam-paperboard laminates obtainable previously. Still further, since the foam aspect of the foam-paperboard laminates of the present invention is improved in consistency, it is expected that the cushioning properties of the foam-paperboard laminates of the present invention will also be improved.

In view of the above, the inventors herein determined that to obtain suitable foam using the in *situ* process, it was necessary to provide an LDPE coating wherein the molecular orientation of the polymer was minimized. However, in the attempt to increase the manufacturing volume of foam-paperboard laminates so as to provide insulated beverage cups, it was found that speeding up of the web speed without modification of any other variables resulted in increased orientation of the LDPE, which, in turn, reduced the ability of the LDPE to foam and/or suitably adhered to the surface of the paperboard after foaming. It was thus determined that in order to provide a suitable foam on a foam-paperboard laminates, it would be necessary to ensure that the LDPE coating was not oriented to a degree that would prevent the coating from suitably foaming under the conditions of the *in situ* foaming process, which is in itself limited.

The inventors determined that, in contrast to the low melt index LDPE typically used to prepare extruded LDPE coatings, foam-paperboard laminates could be suitably prepared from LDPE polymers having higher melt indices. This was found to be due to the fact that the *in situ* foaming process was adversely affected by the use of low melt index polymer when a high speed process was conducted as a result of the increased orientation of the LDPE when a high speed extrusion process was conducted.

Without being bound by theory, it is believed that various properties of the LDPE that are specific to a particular LDPE polymer (such as melt index) can influence the amount of residual strain of the LDPE coating prior to foaming. Still further, it is also believed that the parameters of the extrusion process influence the amount of residual strain of the LDPE coating prior to foaming. It is believed that such higher residual strain inhibits foaming (*e.g.*, the LDPE is too oriented to allow foaming under the conditions of the *in situ* foaming process).

Since it was determined that a higher melt index gives a better quality foam under the *in situ* foaming process, the present invention pertains to foam-paperboard laminates prepared from LDPE having a MI of from greater than 8.0 to about 20 g/10 min, as measured by ASTM 1298. The LDPE of the present invention consists essentially of a MI of greater than 8.0 to about 20 g/10 min, as measured by ASTM 1298. LDPE having such MI's have been found to orient less substantially when the extrusion process is conducted at speeds greater than about 107 m/min (350 feet per minute). As discussed, this lesser orientation is believed to result in the formation of a higher foam quality in the *in situ* process of the present invention.

Still further, foam-paperboard laminates of the present invention are prepared from a LDPE having a MI of greater than 8.0, 8.5, 9.0, 9.5 or 10.0 g/10 min., as measured by ASTM 1298. Yet further, the foam-paperboard laminates of the present invention are prepared from a LDPE having a MI of about 8.5, 9.0, 10.0. 11.0. 12.0, 13.0, 14.0, 15.0, 16.0, 17.0, 18.0, 19.0 or 20.0 g/10 min, as measured by ASTM 1298, where any of the stated values can comprise an upper or a lower endpoint, as appropriate. Such polymers are available, for example, from Westlake Chemical (Houston, TX).

In preparing the foam-paperboard laminates of the present invention, a melted LDPE having a MI conforming to the specified range set out herein is extruded onto a paperboard substrate. The extrusion melt temperatures suitable for the present invention are discussed in more detail herein.

It is also believed that other polyethylene materials that exhibit suitable molecular orientation to allow preparation of a foam that can be used in the invention herein. In this regard, substantially linear ethylene polymers may be used as the extruded polyethylene material. Such polymers are disclosed in U.S. Pat. Nos. 5,272,236 and 5,278,272. Suitable examples of substantially linear ethylene polymers are available from Dow Global Technologies (Freeport, TX).

A particularly suitable paperboard substrate for use in the present invention is solid bleached sulfate ("SBS"). This paperboard is available as "cupstock" or "platestock" from Georgia-Pacific Corporation (Atlanta, GA). SBS exhibits good surface properties (*e.g.*, smoothness) such that the inventors herein have found the adhesion between the foam and the paperboard to be exceedingly good.

Other types of paperboard are also currently thought to be suitable to prepare the foam-paperboard laminates of the present invention, as long as such paperboard products comprise suitable amounts of moisture to act as a blowing agent for the LDPE (as discussed in more detail herein) and has suitable surface properties to provide adequate adhesion between the foam and the paperboard surface. For example, coated unbleached Kraft paperboard could be used in the present invention. Still further, recycled paperboard (either or both of pre- or post-consumer recycled) could also be suitably be used.

In one aspect, the LDPE contains no added adhesive material, such as a maleic anhydride graft copolymer or other type of adhesive polymer. As such, the adhesion of the LDPE to the paperboard occurs by way of adhesion of the LDPE coating to the paperboard. This is a physical attachment of the extruded LDPE to the surface of the paperboard by the LDPE component itself. To provide suitable adhesion, it is believed that the paperboard surface must be somewhat rough to provide adequate points of attachment of the LDPE. Some surface roughness is believed to provide more surface area for contact of the LDPE coating to the paperboard surface. However, it is believed that board surface roughness is only one factor that influences adhesion of the LDPE to the paperboard surface.

Although the extruded LDPE coating is attached to the paperboard surface firmly, it will be appreciated that when foam is generated, the LDPE will be attached to the paperboard surface in a markedly different manner than a LDPE extrusion coating. That is, when an extruded coating of LDPE is applied to a surface to provide a laminate (such as in a coated packaging material), substantially the entire inner surface of the LDPE will be coextensive with the corresponding surface of the paperboard. When foam is prepared from this LDPE coating, the LDPE will be attached to the paperboard in a much less extensive manner because the air voids defining the foam cells represent a loss of contact for the LDPE coating.

In further aspects, the adhesion of the LDPE to the paperboard surface can be improved by applying a surface treatment to the paperboard surface prior to extrusion of the LDPE onto the paperboard surface. For example, the paperboard can be subjected to a corona treatment prior to extrusion of the LDPE. Chemical treatments that provide oxidation effects to the paperboard surface can also be used to promote adhesion. Still further, a tie layer can be applied to the paperboard surface to improve the adhesion of the LDPE to the paperboard. Suitable tie layer materials can be identified by one of ordinary skill in the art without undue experimentation.

It is currently believed by the inventors herein that the thickness of the paperboard material is not particularly significant to the resulting foam qualities. Thus, it is believed that paperboard having a wide range of thicknesses (calipers) can be used to prepare the foam-paperboard laminates of the present invention. As non-limiting examples, it is believed that paperboard of from about 254 $\mu$m (10 mils) to about 1270 $\mu$m (50 mils), or from about 381 $\mu$m (15 mils) to about 762 $\mu$m (30 mils) can suitably be used herein. The thickness of the resulting foam-paperboard laminates of the present invention will be dictated in large part by the thickness of the paperboard used, since the thickness of the foam-paperboard laminates comprises the sum of the thickness of the foam and the paperboard used.

Still further, the basis weight of the paperboard suitably used in the present invention is not believed to significantly effect the properties of the resulting foam-paperboard laminates. As such, the basis weight of the paperboard used is generally dictated by the desired end use for the foam-paperboard laminates. For example, if the foam-paperboard laminate is to be used to prepare beverage cups, a desirable basis weight for the paperboard is from about 162.8 g/m$^2$ (100 pounds per ream) to about 358 g/m$^2$ (220 pounds per ream) or from about 227.9 g/m$^2$ (140) to about 293 g/min (180 pounds per ream). If the foam-paperboard laminate is to be used to prepare disposable plates or containers, a desirable basis weight for the paperboard is from about 162.8 g/m$^2$ (100 pounds per ream) to about 455.7 g/m$^2$ (280 pounds per ream) or from about 260.4 g/m$^2$ (160 pounds per ream) to about 358.0 g/m$^2$ (220 pounds per ream). Suitable further paperboard basis weights can be determined by one of ordinary skill in the art without undue experimentation.

While the paperboard thickness and basis weight are not currently believed to be significant to the properties of the foam-paperboard laminates of the present invention, the inventors herein have determined that the paperboard used must comprise a suitable amount of moisture in the paperboard prior to heating so as to allow enough steam to escape from the paperboard, so as to operate as a blowing agent for the LDPE to result in foaming. In some aspects, the amount of moisture is highly significant to the qualities of the resulting foam. For SBS paperboard, it has been found that the amount of moisture in the board should be from about 4 to about 10 %, as measured by the weight of the board.

Still further, the amount of moisture in the board can be from about 5 to about 7 %, as measured by the weight of the board. Yet further, the amount of moisture can be from about 4, 5, 6, 7, 8, 9 or 10 % as measured by weight of the board, where any value can form an upper or a lower endpoint, as appropriate.

Any suitable extrusion equipment can be used to coat the paperboard; for example, one suitable coating apparatus is an Egan 34 (Egan, Sommerville, NJ) extrusion coater provided with a 91.4 cm (36 inch) wide EDI die having a multi-layer configuration with a screw feeding a Cloeren combining block.

Prior to preparing the foam aspect of the foam-paperboard laminates of the present invention, LDPE having the properties set forth above is extruded onto a paperboard having the features discussed previously. A number of parameters have been found to be significant to provide foam-paperboard laminates having good foam qualities. Various extrusion parameters are believed to significantly affect the resulting orientation of the LDPE coating prior to foaming.

In particular, the inventors herein have determined that the significant extrusion parameters comprise at least: die gap, air gap (*h*), rotational speed *i.e.*, speed of the polymer exiting the die ($v_0$) and web speed ($v_1$). These parameters have been found to affect foaming level through the elongational strain, ε, that the polymer experiences upon extrusion, which is believed to be due to machine direction ("MD") molecular orientation.

Without being bound by theory, the inventors herein believe that in order to improve foam caliper and foam cell quality, the elongational strain of the LDPE polymer must be minimized. As noted previously, elongational strain can be minimized through use of a LDPE having a MI of greater than about 8.0 when the extrusion process is conducted at speeds of greater than about 107 m/min (350 feet per minute) However, it has been found to be possible to reduce the amount of elongational strain when modifying several extrusion parameters. As such, it was found to be possible to prepare good foams using the in *situ* foaming process with LDPE having MI's of as low as about 5.7. Further, these extrusion parameters were found to be useful even when using LDPE having MI's of greater than about 8.0.

Ratio of Web Speed to Rotational Speed $\left(\frac{v_1}{v_0}\right)$; : The ratio of screw rotational speed to web speed has been found to affect the draw-down of the LDPE as it is exits the extruder. In relation to the foam aspect of the foam-paperboard laminates of the present invention, it has been found that increasing this ratio (that is extruding a higher volume of LDPE onto the paperboard surface while keeping web speed constant) will increase the flexural stiffness of the LDPE layer which, in turn, will create more resistance to foaming. Thus, the screw rotational speed must be considered in the present invention so as to obtain a suitable coat weight at a desired web speed to obtain good quality LDPE foams.

Die Gap and Air Gap: The inventors have also determined that reducing die gap reduces the draw down ratio of the LDPE and, consequently, the elongational strain of the LDPE. Without being bound by theory, it has been determined that increasing the air gap allows more time for molecular relaxation prior to reaching the extruder nip. This is believed to result in less orientation in the polymer, which, in turn, results in better foaming under the conditions of the *in situ* foaming process.

In accordance with this discovery, the air gap (the distance between the extruder nip and the web) can be from about 22.9 cm (9 inches) to about 50.8 cm (20 inches), or from about 25.4 cm (10 inches) to about 33.0 cm (13 inches). Still further, the air gap can be from 22.9, 25.4, 27.9, 30.5, 33.0, 35.6, 38.1, 43.2 or 50.8 cm (9, 10, 11, 12, 13, 14, 15, 17 or 20 inches), where any value can serve as an upper or lower endpoint, as appropriate.

The extruder die gap can be from about 254 μm (10 mils) to about 635 μm (25 mils) or from about 330 μm (13 mils) to about 432 μm (17 mils), where any value can serve as an upper or lower endpoint, as appropriate. Yet further, the extruder die gap can be from about 254, 279, 305, 330, 356, 381, 406, 432, 457, 483, 508, 559 or 635 μm (10, 11, 12, 13, 14, 15, 16,17,18, 19, 20, 22 or 25 mils), where any value can serve as an upper or lower endpoint, as appropriate.

These stated die gaps and/or air gap parameters were found to result in good foam qualities when used with LDPE having MI's of as low as about 5.7 at web speeds of greater than about 107 m/min (350 feet per minute). This is in contrast to prior art die gaps and air gaps used for the *in situ* process which did not provide a good quality foam with LDPE's haying MI's of as low as about 5.7 when the web speed was greater than about 107 m/min (350 feet per minute).

Without being bound by theory, it is believed that a smaller die gap can reduce the propensity of the LDPE polymer chains to align during the extrusion process, thereby generally increasing the number of amorphous regions in the LDPE extruded coating. This, in turn, is believed to result in a "softer" LDPE extruded coating, which improves the foamability and adhesion of the LDPE polymer when subjected to the conditions of the *in situ* process.

Polymer thickness: It has been found by the inventors herein that increasing the thickness of LDPE extruded on paperboard decreases the draw down ratio (when all other variables are kept constant), which has been found to reduce residual polymer stress in the extruded LDPE coating prior to foaming. It has been also found by the inventors herein that thicker LDPE coatings exhibit higher flexural stiffness, which generally inhibits foam formation. These two parameters should be considered when preparing the foam-paperboard laminates of the present invention.

Without being bound by theory, it is believed that these opposing factors of decreasing draw down ratio and higher flexural stiffness provides a specific coating thickness at which maximum foam caliper can be obtained under the conditions of the *in situ* foaming process. Significantly, in the *in situ* foaming process, there is a maximum amount of blowing agent action that is provided by the moisture contained within the paperboard. Put simply, there is an upper limit of coating thickness to which the steam blowing agent can effectively operate given the amount of moisture present in the paperboard. The upper polymer thickness that is feasible varies with the properties of the LDPE used and with the level of extruded LDPE extruded coating adhesion to the paperboard surface.

For a lower stiffness LDPE (for example, a LDPE having a MI of greater than about 8.0 g/10 min), the extruded coat weight can be less than about 48.8 g/$m^2$ (30 pounds per ream) to obtain suitable foam. In particular, the coat weight can be less than about 43.9 g/$m^2$ (27 pounds per ream). Yet further, the coat weight is from about 24.4 g/$m^2$ (15 pounds per ream) to about 43.9 g/$m^2$ (27 pounds per ream). Still further, the coat weight is at least about 24.4, 27.7, 30.9, 34.1, 37.4 or 40.7 g/$m^2$ (15, 17, 19, 21, 23, 25) or less than about 43.9 g/$m^2$ (27 pounds per ream), where any value can serve as an upper or lower endpoint, as appropriate. Note that the coat weight values assume that the polymer is evenly applied to the surface of the paperboard.

These stated values for the polymer thickness for LDPE having the stated MI values are significantly different than prior art in *situ* LDPE foaming processes.

In particular, the only known commercial applications of the in *situ* foaming process is conducted by the assignee of the present invention in that PerfecTouch® beverage cups are made from this process. However, prior to the improvements of the present invention, it believed that a LDPE coat weight of 48.8 g/$m^2$ (30 pounds per ream) or greater was necessary to obtain suitable foaming. (This process was conducted using web speeds of less than about 91 m/min (300 feet per minute).)

In the present invention, it has been found that significantly lower LDPE coat weight can be used to obtain an excellent foam using the *in situ* foaming, process of the present invention even when using speeds of greater than about 107 m/min (350 feet per minute). The lower polymer weight results in considerable cost savings in the present invention. Further, the lower polymer weight results in considerable energy savings.

<u>Extrusion Melt Temperature</u>: It is believed that increasing melt temperature increases LDPE temperature at the extruder nip. Such higher LDPE temperature is believed to result in better adhesion of the LDPE extruded coat to the paperboard surface. This is further thought to improve adhesion. In addition, at higher temperatures, it is believed that there is an increase in polymer chain relaxation and a reduction in elongational strain.

Without being bound by theory, it is believed that these features would be expected to improve the ability of the LDPE coating to foam due to the improvements in the adhesion of the polymer coat prior to foaming. The melt temperature of the LDPE can be from about 288°C (550 °F) to about 343°C (650 °F) or from about 304°C (580°F) to about 327°C (620 °F).

<u>Web Speed</u>: A significant aspect of the present invention is that using LDPE having the specified characteristics and methods of the present invention, the web speed can be run significantly faster than in the prior art, while still obtaining an excellent foam qualities in the foam-paperboard laminates of the present invention. In accordance with this aspect of the invention, the web speed is greater than about 99 m/min (325 feet per minute.) Yet further, the web speed is greater than about 107 m/min (350 feet per minute). Still further, the web speed is from about 107 m/min (350 feet per minute) to about 274 m/min (900 feet per minute). The web speed can be about 99, 107, 122, 137, 152, 168, 183, 198, 213, 229, 244, 259 or 274 m/min (325, 350, 400, 450, 500, 550, 600, 650, 700, 750, 800, 850 or 900 feet per minute), where any value can be used as an upper or lower endpoint, as appropriate.

Due to processing difficulties seen in the manufacture of PerfecTouch beverage cups, it was surprising that the web speed could be greater than 91 m/min (300 feet per minute). Using prior art LDPE and *in situ* foaming methodology, it was thought to be necessary to keep the web speed significantly lower. The higher speeds of one aspect of the present invention make it possible to manufacture the foam-paperboard laminates of the present invention in significantly higher volumes, which greatly increases the industrial utility of the foam-paperboard laminates of the present invention. It is believed that by varying the parameters of the extrusion coating process, less polymer chain alignment will result in the coating, which, in turn, will result in a "softer" coating that will allow better foamability.

As discussed, foam for use to prepare LDPE foam is typically prepared by adding chemical blowing agent or physical blowing agent. The only known use of the *in situ* process herein is the PerfecTouch® beverage cups process conducted by the assignee of the present invention. In this process, the blowing agent for the LDPE coating results from the creation of steam (evaporation of water from the paperboard). To provide the foam of the foam-paperboard laminates of the present invention, there must be enough moisture in the paperboard to create vapor pressure below the extruded LDPE surface to cause deformation of the coating, which manifests in the finished foam-paperboard laminates as foam. However, the inventors herein have determined that excessive moisture in the paperboard can increase the time required for the paperboard to suitably heat and, in turn, for steam to form. This wastes energy because, as would be appreciated, if more heat is applied to the system, more energy is required.

With regard to the foaming process itself, the LDPE-coated paperboard material having the stated amount of moisture are placed in an oven to provide the foam. The oven temperatures can be from about 93°C (200 °F) to about 166°C (330 °F). Yet further, the oven temperatures can be from about 118°C (245 °F) to about 135°C (275 °F).

The residence time (that is, the time the LDPE-coated laminate is subjected to heat so as to provide the foam) can be from about 30 to about 120 seconds. Yet further, the residence time can be 60 to about 90 seconds. In order to provide a high speed generation of the foam, it can be desirable to decrease the residence time of the LDPE-coated paperboard material. Keeping all variables the same, the residence time can be decreased by increasing the oven temperature. However, as discussed elsewhere herein, while higher oven temperatures result in a quicker formation of steam and, accordingly, a faster activation of the coating, if the LDPE-coated paperboard material is heated too quickly, the resulting foam quality often will be unsuitable. Thus, the oven temperature must be moderated so as to provide suitable quality foam.

After application of the LDPE-coating to the paperboard, this material can be used immediately to prepare the foam-paperboard laminate of the present invention. Alternatively, the LDPE-coated paperboard can be stored for later preparation of the foam-paperboard laminate as long as the paperboard retains or is provided with suitable moisture prior to the foaming process.

It should be noted that the above-stated percentages of moisture are relevant when the paperboard surface opposite the LDPE-coated paperboard surface is provided with an occlusive layer. For example, when insulated beverage cups are prepared from the foam-paperboard laminates of the present invention, an occlusive layer of a polyolefin, such as a blend of LDPE and HDPE, can be extruded onto one side of the paperboard. This HDPE-coated inner surface will become the side of the cup that is in contact with the liquid during use. During the heating process in which the foam is formed, the HDPE layer prevents the moisture in the paperboard from exiting the paperboard through the HDPE-coated surface. A pressure build up also happens at this time. As such, when the inner surface of the paperboard is so coated with an occlusive layer (which can also be other polymeric material, wax, etc.), the previously stated amount of moisture (e.g. about 4 to about 10 % by weight of the board) has been found to provide suitable foaming.

The individual foam cells comprising the foam-paperboard laminates of the present invention can be from about 40 to about 150 square microns on average. Still further, the individual foam cells comprising the foam-paperboard laminate of the present invention can be from about 40, 50, 60, 70, 80, 90, 100, 110, 120, 130, 140, 150, 160, 170, 180, 190 or 200 square microns on average, where any value can form an upper or a lower end point, as appropriate. Yet further, at least about 90 % or at least about 95 % of the individual foam cells conform to the specified size range. It would be understood that small foam cells are not thought to be undesireable, as long as the aspect ratios were as set forth herein. However, it is believed that the *in situ* foaming process of the present invention would not generally allow the formation of very small foam cells due to limitations resulting from the characteristics of the foam blowing agent. It is expected that foam cells falling outside of the specified range would fall on the high end of the stated range.

In accordance with the foam-paperboard laminates of the present invention, more than about 90 % of the foam cells comprise an elongate structure extending away from the paperboard, wherein their aspect ratio is greater than about 2, with less than about 10 % of the cells are in the form of large cells having that have aspect ratios of less than 2. "Aspect ratio" means the ratio of the height of the foam cells divided by the average horizontal span of the cell over a single sample of foam-paperboard laminate. Thus, an aspect ratio of greater than about 2 means that the height of the foam cells is at least about 2 times the width of the cells. Still further, 5 % or less of the foam cells have aspect ratios of less than about 2.

Further suitable foams can have a regular microstructure wherein the cells have an average MD ratio of less than about 1.5 or less than about 1.25. MD ratio is the length of the cell in the machine direction as observed by surface SEM, divided by the length of the cell in the cross machine direction as observed by surface SEM.

Unrestrained MD linear thermal shrinkage resistance at 110 ° C is determined in accordance with ASTM test method, ASTM 2732-03, except that thermal shrinkage resistance at 110° C is reported as a percent of the original length of the specimen. For example, a specimen having a 100 mm length prior to immersion in the heated bath and a MD length of 90 mm after immersion for 10 seconds has an unrestrained MD linear thermal shrinkage resistance of about 90 %. This parameter is believed significant in connection with foam quality of foams produced from the extruded LDPE as will be appreciated from the discussion which follows hereinafter. It will be appreciated also from the data that follows that the shrinkage resistance is sensitive to the speed at which the board web is traveling in the machine direction as well as other variable as the LDPE coating is applied. In general, a MD shrink value of from about 80 % to up to about 100 % provides a good quality foam (where 100 % represents no shrinkage and, therefore, substantially no orientation in the extruded LDPE coating).

A sample of foam-paperboard laminate for shrink resistance testing may be obtained by placing a Kevlar or other LDPE coating on the paperboard prior to extrusion so that a foam sample can readily separate from the paperboard. Alternatively, a sample may be removed from coated board by sulfuric acid solution. If a sample is to be obtained by way of sulfuric acid solution, a MD specimen is cut using a 15.2 cm (6 inch) by 1.3 cm (½ inch) die cutter. The paperboard is split in half exposing the paper fibers and only the half that has the extruded LDPE is retained. The sample is placed in an 800 ml beaker covered with 72 percent $H_2SO_4$ aqueous solution and let stand for five to eight hours with occasional stirring. The sample is washed with tap water and dried prior to shrink resistance testing.

The foam surface of the foam-paperboard laminates of the present invention can be printed with ink or mineral oil, for example, in order to provide designs which are attractive and can mimic, for example, embossments or debossments. In this respect, attention is drawn to the following U.S. Patents: U.S. Patent No. 5,490,631 to Iioka et al.; U.S. Patent No. 5,725,916 to Ishii et al.; U.S. Patent No. 5,766,709 to Geddes et al.; U.S. Patent No. 5,840,139 to Geddes et al.; U.S. Patent No. 6,030,476 also to Geddes et al.; U.S. Patent No. 6,139,665 to Schmelzer et al.; U.S. Patent No. 6,308,883 also to Schmelzer et al.; and U.S. Patent No. 6,319,590 to Geddes et al.

The foam-paperboard laminates of the present invention are suitable for use in a number of different applications. A significant use is for insulating beverage cups sold commercially by the assignee of this invention as PerfecTouch. The processes and methods used to prepare such cups are disclosed in detail in the following U.S. Patents: U.S. Patent No. 6,129,653 to Fredericks et al.; U.S. Patent No. 6,416,829 to Breining et al.; U.S. Patent No. 6,482,481 to Fredericks *et al*.; U.S. Patent No. 6,565,934 also to Fredericks et al.; U.S. Patent No. 6,663,927 to Breining et al.; U.S. Patent No. 6,676,586 to Breining et al.; U.S. Patent No. 6,703,090 to Breining et al.; and United States Patent Application Publication No.: US 2004/0126517 also to Breining et al.

As disclosed in the referenced PerfecTouch-related patents, sealing of the cups can be facilitated by doping of the LDPE layer with an amount of HDPE, where the inner layer is coated with HDPE to serve as an occlusive layer. Inasmuch as the occlusive coating and the foamable coating are both LDPE-based, the two coatings will adhere well to one another when melt-bonded. The modified LDPE containing HDPE will not foam under conditions utilized to foam the LDPE outer coating. Such doping is also believed to be feasible when the foam-paperboard laminates of the present invention are to be converted into, for example, packaging materials, such as boxes or other types of structures having edges or surfaces that are adhered together. However, when sealing the foam-paperboard laminates, an upper limit of MI is believed to exist in that if the LDPE polymer is too soft, it could be difficult to obtain a good seal on the cup. Other forms of sealing, such as by separate application of adhesives, are also believed to have utility in the present invention.

The invention as used in insulated beverage cups is illustrated and explained further in connection with **Figures 1, 1a** and the Figures following.

There is shown in **Figures 1** and **1a** a paperboard cup **10** which includes a bottom panel **12** as well as a sidewall **14** and a curled brim **16.** Bottom panel **12** has a polymer occlusive layer **18** which may be a blend of LDPE and HDPE, for example, as well as paperboard layer **20.** The bottom side of paperboard layer **20** of panel **12** does not have a occlusive layer since it is not typically foamed. Looking at a finished cup prepared from the foam-paperboard laminates of the present invention, it will be appreciated from **Figure 1a** that the various layers are particularly concentrated in the area of attachment of the sidewall and bottom panel. This structure becomes even more complex in the area of a seam as well be appreciated by one skilled in the art. In suitable form, the occlusive layer **18** is predominantly a blend of LDPE/HDPE and the foam layer **22** of sidewall **14** consists essentially of LDPE such that the two layers will readily melt bond when they come in contact at a seam (not shown).

In regards to the structure of the foam-paperboard laminates, sidewall **14** includes a foamed layer **22** which comprises an *in situ* foamed LDPE coating. Sidewall **14** also comprises a paperboard layer **24** as well as a occlusive layer **26** on its inner surface. Layer **26** is suitably a modified LDPE which incorporates about 10 % by weight of HDPE. Any suitable polymer composition, suitably one which does not foam under conditions used to foam the *in situ* foamed coating on the outside of the cup, may be used as the occlusive layer.

In addition to insulated beverage cups, the foam-paperboard laminates of the present invention have a number of utilities. For example, the foam-paperboard laminates of the present invention can be used as containers for take-out food items, such as hamburger or sandwich "clamshells." The foam-paperboard laminates of the present invention can also be used as a substitute for polystyrene foam take out containers. The insulating qualities of the foam paperboard laminates of the present invention are believed to be suitable for use in hot food applications. Moreover, since the foam-paperboard laminates of the present invention comprise primarily paperboard material, they are compostable. In the foodservice area where foam waste is generally undesirable, the foam-paperboard laminates of the present invention would be quite desirable.

The foam-paperboard laminates provide utility for types of packaging where insulation is desirable. For example, the foam-paperboard laminates of the present invention can be used to package frozen food, such as ice cream, vegetables, dinners, pizzas, meats and the like. Further, since the foam-paperboard laminates are heat resistant, the foam-paperboard laminates can be used to heat the frozen food for end use. The foam-paperboard laminates can also be used for refrigerated food where insulation is desirable, such as a wrapper for butter, cheese and the like.

The insulating character of the foam-paperboard laminates also make them suitable for use as insulating sleeves for hot beverages. Such an example is a hot cup sleeve.

The foam-paperboard laminates are also grease and fat resistant due to the polymeric nature of the coating, which also makes these materials suitable for packaging products such as butter, cheese and the like.

The foam-paperboard laminates can also be used as an insulating sleeve or box to assist in transporting frozen or refrigerated goods. For example, the insulating sleeve or box can be used to transport hot and cold items from the grocery store to a residence by a consumer or the like.

Still further, the cushion characteristics of the present invention make the foam-paperboard laminates of the present invention suitable for use in packaging materials where cushioning is desirable. For example, the foam-paperboard laminates can be used as cushioning for fragile items, such as plates or other dishware. The foam-paperboard laminates can also be used as cushioned shipping envelopes, such as for transporting CD's or photos or the like.

The foam paperboard laminates can also be used as a cushioning or insulating material inside of a packaging material. For example, when the foam material is positioned inside a box, the cushioning material will provide protection against scuffing or marring of easily damaged products.

The foam-paperboard laminates of the present invention can also be used in any application where a fairly thin foam laminate made from plastic has been used previously. Since the foam-paperboard laminates of the present invention are compostable, it would be expected that these inventive materials will have utility when it is desirable to reduce plastic waste. When coated with a barrier material, such as HDPE, the foam-paperboard laminates can be expected to function well as disposable products even in moist environments. To this end, the foam-paperboard laminates of the present invention can be used as shoe inserts, sandals or the like.

Yet further, the since the foam aspect of the foam-paperboard laminates of the present invention is textured, the foam-paperboard laminates of the present invention can be useful in applications where it is desirable to increase the slip-resistance of an item. To this end, the foam-paperboard laminates can be used in preparing slip-resistant beverage cartons or in other applications where grippability is desirable.

Still further, the foam-paperboard laminates of the present invention can be used as foodservice containers for greasy foods, such as popcorn or fried chicken. The textured surface of the container assists in holding thereof if the outer surface of the container becomes greasy. Further, the coated container is resistant to grease, thus making the container substantially impermeable to the greasy food inside the container.

The foam-paperboard laminates of the present invention has an appearance that can be described as "pearlescent" or "opalescent." Such an appearance lends itself to premium packaging materials where aesthetic desirability is highly valued. To this end, the foam-paperboard laminates of the present invention are suitable for use in "high end" packaging materials where insulation or cushioning are not readily needed. Such potential applications include perfume and/or jewelry packaging.

The foam-paperboard laminates can also be used as a disposable cutting board due to the cut resistance of the foam. The foam-paperboard laminates can also be used as a disposable trivet due to its heat resistant qualities. The foam-paperboard laminates can also be used to store knives safely. Yet further, the foam-paperboard laminates can be used as shelf liner, place mat, wall covering, acoustic barrier for wall or floor, floor mat and polishing material.

With respect to the layers of the foam-paperboard laminates of the present invention, additional components besides the primary polymer materials can be added; such as stabilizers, nucleants, fillers, compatible blended in polymers and so forth, so long as the additional ingredients do not change the basic and novel characteristics of the foam-paperboard laminates, that is, its ability to be foamed *in situ.* Likewise, polymers such as LDPE or HDPE may contain amounts of comonomers in addition to ethylene which is the predominant monomer.

The foam-paperboard laminates used to form sidewall **14** includes paperboard layer **24,** barrier layer **26** and a foamable coating layer **22a.** The foam-paperboard laminates can be produced on an apparatus shown schematically in part in **Figure 2.** The structure of the foam-paperboard laminates prior to foaming is shown in **Figure 2a.**

With regard to the extrusion process, there is shown in **Figure 2** a coating station **30** including a coating nip **32** defined between a support roll **34** and a chill roll **36.** Coating station **30** also includes an extruder **38** feeding a slit die **40** which has a die gap or width indicated at **42.** The die is located at height **44** (also referred to as air gap **44)** above the center of nip **32** as shown in the diagram.

In order to coat paperboard **24,** a web **50** of paperboard **24** is fed to the nip in the machine direction as shown by arrows **25** while a curtain **32** of molten LDPE is fed from die **42** on to the board. Chill roll **36** cools the polymer as it adheres to the board. The curtain **52** thus becomes a foamable LDPE layer **22a** as shown in **Figure 2a.**

## EXAMPLES

The following Examples are put forth so as to provide those of ordinary skill in the art with a complete disclosure and description of how the present invention is practiced, and associated processes and methods are constructed, used, and evaluated, and are intended to be purely exemplary of the invention and are not intended to limit the scope of what the inventors regard as their invention. There are examples which are in accordance with the present invention as of independent claims 1 and 16, as well as comparative examples. Efforts have been made to ensure accuracy with respect to numbers (e.g., amounts, temperature, *etc.*) but some errors and deviations should be accounted for. Unless indicated otherwise, parts are parts by weight, temperature is as specified or is at ambient temperature, and pressure is at or near atmospheric.

## A. PREPARATION OF INSULATED BEVERAGE CUPS FROM FOAM-PAPERBOARD LAMINATES OF THE PRESENT INVENTION

Utilizing generally the apparatus and procedures described above, a series of extrusion-coated LDPE paperboard samples were prepared and foamed *in situ* at a temperature of about 130 ° C for from about I minute to about 2 minutes. The paperboard used had a thickness of about 381μm (15 mils). The paperboard was extrusion-coated on one side with 90 % LDPE/10 % HDPE at about 8.1 g/m$^2$ (5 pounds per ream). This coating had a thickness of about 10 μm (0.4 mils). The other side of the paperboard was extrusion-coated with LDPE at from about 29.3 g/m$^2$ (18 pounds per ream) and about 57.0 g/m$^2$ (35 pounds per ream) using different web speeds, air gaps, die gaps, melt temperatures and polymers of different melt indices as set out in more detail below.

**Table 1 - Typical Physical Properties of WESTLAKE EC 476 LDPE**

| Property | Value | ASTM Method |
|---|---|---|
| Melt index (g/10 min.) | 13.7 | D 1238 |
| Density (g/cm$^3$) | 0.9165 | D 1505 |
| Ultimate tensile (N/mm$^2$(psi)) | 8.96 (1300) | D 638 |
| Elongation (%) | 450 | D 638 |
| Tensile modulus (N/mm$^2$(psi)) | 96.53 (14000) | D 1709 |
| Vicat softening (°C) | 87 | D1525 |

**Table 2 - Typical Physical Properties of WESTLAKE EC 478 LDPE**

| Property | Value | ASTM Method |
|---|---|---|
| Melt index (g/10 min.) | 4.5 | D 1238 |
| Density (g/cm$^3$) | 0.923 | D 1505 |
| Ultimate tensile (N/mm$^2$(psi)) | 11.03 (1600) | D 638 |
| Elongation (%) | 450 | D 638 |
| Tensile modulus (N/mm$^2$(psi)) | 248.21 (36000) | D 1709 |
| Vicat softening (°C) | 100 | D 1525 |

**Table 3 - Typical Physical Properties of WESTLAKE EC 479 LDPE**

| Property | Value | ASTM Method |
|---|---|---|
| Melt index (g/10 min.) | 5.7 | D 1238 |
| Density (g/cm$^3$) | 0.921 | D 1505 |
| Ultimate tensile (N/mm$^2$(psi)) | 10.00 (1450) | D 638 |
| Elongation (%) | 475 | D 638 |
| Tensile modulus (N/mm$^2$(psi)) | 137.90 (20000) | D 1709 |
| Vicat softening (°C) | 92 | D 1525 |

**Table 4 - Typical Physical Properties of WESTLAKE EC 482 LDPE**

| Property | Value | ASTM Method |
|---|---|---|
| Melt index (g/10 min.) | 12.0 | D 1238 |
| Density (g/cm$^3$) | 0.9183 | D 1505 |

(continued)

| Property | Value | ASTM Method |
|---|---|---|
| Ultimate tensile ($N/mm^2$(psi)) | 9.65 (1400) | D 638 |
| Elongation (%) | 500 | D 638 |
| Tensile modulus ($N/mm^2$(psi)) | 137.90 (20000) | D 1709 |
| Vicat softening (°C) | 88 | D 1525 |

Details and results appear in the Tables below and **Figures 3-20B** annexed hereto. Foam calipers are reported in the total of foam, paperboard and occlusive layer.

**Table 5 - Extruded LDPE Paperboard Composites-Experimental Parameters**

| Polymer MI | Speed (m/min (ft/min)) | Air Gap (cm (inches)) | PE Weight (g/m$^2$ (pds. per ream)) | Melt Temp (°C (°F)) | TMI Foam (μm (mils)) | MD Shrink % | Extruder RPM | Extruder Amps | Extruder (mPa (PSI)) |
|---|---|---|---|---|---|---|---|---|---|
| 4.5 | 91 (300) | 22.9 (9) | 43.5 (26.7) | 303 (577) | 693 (27.3) | 85 | 125 | 200 | 15.93 (2310) |
| 4.5 | 91 (300) | 22.9 (9) | 41.2 (25.3) | 309 (589) | 653 (25.7) | 86 | 125 | 200 | 14.89 (2160) |
| 4.5 | 91 (300) | 22.9 (9) | 57.8 (35.5) | 319 (606) | 485 (19.1) | 91 | 200 | 247 | 17.44 (2530) |
| 4.5 | 137 (450) | 22.9 (9) | 36.6 (22.5) | 317 (603) | 579 (22.8) | 86 | 188 | 230 | 17.10 (2480) |
| 4.5 | 137 (450) | 33.0 (13) | 35.8 (22) | 320 (608) | 483 (19) | . | 188 | 232 | 17.17 (2490) |
| 4.5 | 91 (300) | 22.9 (9) | 41.3 (25.4) | 314 (598) | 658 (25.9) | 81 | 126 | 191 | 14.41 (2090) |
| 4.5 | 91 (300) | 22.9 (9) | 57.3 (35.2) | 321 (610) | 483 (19) | 68 | 200 | 240 | 17.10 (2480) |
| 4.5 | 137 (450) | 22.9 (9) | 35.6 (21.9) | 321 (610) | 556 (21.9) | 76 | 188 | 223 | 16.75 (2430) |
| 5.7 | 91 (300) | 33.0 (13) | 40.4 (24.8) | 306 (582) | 729 (28.7) | 69 | 125 | 186 | 14.96 (2170) |
| 5.7 | 91 (300) | 22.9 (9) | 38.3 (23.5) | 311 (591) | 757 (29.8) | . | 125 | 185 | 17.65 (2560) |
| 5.7 | 91 (300) | 22.9 (9) | 52.7 (32.4) | 316 (600) | 678 (26.7) | . | 200 | 225 | 16.90 (2450) |
| 5.7 | 91 (300) | 33.0 (13) | 38.9 (23.9) | 309 (588) | 691 (27.2) | 74 | 125 | 186 | 18.96 (2750) |
| 5.7 | 91 (300) | 33.0 (13) | 41.7 (25.6) | 301 (574) | 719 (28.3) | 79 | 125 | 187 | 15.17 (2200) |
| 5.7 | 91 (300) | 33.0 (13) | 39.1 (24) | 309 (588) | 686 (27) | 79 | 125 | 189 | 18.00 (2610) |
| 5.7 | 91 (300) | 33.0 (13) | 42.3 (26) | 317 (602) | 737 (29) | . | 200 | 225 | 16.82 (2440) |
| 5.7 | 137 (450) | 22.9 (9) | 37.3 (22.9) | 312 (593) | 699 (27.5) | 64 | 188 | 219 | 17.31 (2510) |
| 5.7 | 137 (450) | 22.9 (9) | 29.5 (18.1) | 313 (596) | 709 (27.9) | 69 | 188 | 223 | 20.75 (3010) |
| 5.7 | 137 (450) | 22.9 (9) | 39.1 (24) | 316 (601) | 701 (27.6) | . | 200 | 235 | 16.96 (2460) |
| 5.7 | 137 (450) | 33.0 (13) | 35.0 (21.5) | 311 (592) | 780 (30.7) | 74 | 188 | 215 | 21.72 (3150) |
| 5.7 | 137 (450) | 33.0 (13) | 36.3 (22.3) | 309 (589) | 790 (31.1) | 70 | 188 | 219 | 17.44 (2530) |
| 5.7 | 137 (450) | 33.0 (13) | 31.4 (19.3) | 309 (589) | 752 (29.6) | 72 | 188 | 215 | 20.20 (2930) |
| 5.7 | 91 (300) | 22.9 (9) | 34.8 (21.4) | 316 (600) | 693 (27.3) | 79 | 125 | 184 | 14.07 (2040) |
| 5.7 | 91 (300) | 22.9 (9) | 51.4 (31.6) | 314 (598) | 478 (18.8) | 79 | 200 | 235 | 16.82 (2440) |

(continued)

| Polymer MI | Speed (m/min (ft/min)) | Air Gap (cm (inches)) | PE Weight (g/m$^2$ (pds. per ream)) | Melt Temp (°C (°F)) | TMI Foam (μm (mils)) | MD Shrink % | Extruder RPM | Extruder Amps | Extruder (mPa (PSI)) |
|---|---|---|---|---|---|---|---|---|---|
| 5.7 | 91 (300) | 33.0 (13) | 39.9 (24.5) | 311 (592) | 686 (27) | 80 | 125 | 183 | 14.00 (2030) |
| 5.7 | 137 (450) | 33.0 (13) | 41.3 (25.4) | 303 (578) | 691 (27.2) | 79 | 188 | 220 | 17.86 (2590) |
| 5.7 | 137 (450) | 22.9 (9) | 40.9 (25.1) | 307 (584) | 706 (27.8) | 70 | 188 | 217 | 17.31 (2510) |
| 12.0 | 137 (450) | 22.9 (9) | 36.1 (22.2) | 313 (596) | 833 (32.8) | 85 | 190 | 193 | 14.00 (2030) |
| 12.0 | 91 (300) | 22.9 (9) | 37.8 (23.2) | 309 (589) | 787 (31) | 82 | 126 | 157 | 11.51 (1670) |
| 12.0 | 91 (300) | 22.9 (9) | 56.3 (34.6) | 313 (595) | 624 (24.58) | 80 | 200 | 207 | 14.07 (2040) |
| 12.0 | 137 (450) | 33.0 (13) | 42.0 (25.8) | 314 (598) | 841 (33.1) | 81 | 190 | 192 | 14.00 (2030) |
| 12.0 | 91 (300) | 33.0 (13) | 38.7 (23.8) | 309 (589) | 782 (30.8) | 93 | 126 | 163 | 11.38 (1650) |
| 12.0 | 91 (300) | 33.0 (13) | 57.0 (35) | 314 (597) | 566 (22.3) | 81 | 200 | 209 | 14.00 (2030) |
| 12.0 | 137 (450) | 33.0 (13) | 40.0 (24.4) | 303 (577) | 759 (29.9) | 76 | 190 | 196 | 14.76 (2140) |
| 12.0 | 91 (300) | 33.0 (13) | 43.5 (26.7) | 297 (567) | 770 (30.3) | 91 | 126 | 162 | 12.62 (1830) |
| 12.0 | 137 (450) | 22.9 (9) | 39.4 (24.2) | 305 (581) | 790 (31.1) | 77 | 190 | 198 | 14.62 (2120) |
| 12.0 | 91 (300) | 22.9 (9) | 39.4 (24.2) | 300 (572) | 772 (30.4) | 81 | 126 | 164 | 12.34 (1790) |
| 13.7 | 91 (300) | 22.9 (9) | 40.9 (25.1) | 297 (566) | 757 (29.8) | 77 | 126 | 149 | 12.34 (1790) |
| 13.7 | 91 (300) | 22.9 (9) | 35.3 (21.7) | 307 (585) | 759 (29.9) | 91 | 126 | 146 | 11.10 (1610) |
| 13.7 | 91 (300) | 22.9 (9) | 45.6 (28) | 311 (592) | 775 (30.5) | 85 | 200 | 198 | 13.86 (2010) |
| 13.7 | 91 (300) | 33.0 (13) | 40.7 (25) | 297 (567) | 785 (30.9) | 98 | 126 | 149 | 12.27 (1780) |
| 13.7 | 91 (300) | 33.0 (13) | 37.9 (23.3) | 304 (580) | 869 (34.2) | 74 | 126 | 152 | 11.51 (1670) |
| 13.7 | 91 (300) | 33.0 (13) | 51.6 (31.7) | 310 (590) | 734 (28.9) | 83 | 200 | 201 | 14.07 (2040) |
| 13.7 | 137 (450) | 22.9 (9) | 36.0 (22.1) | 302 (576) | 406 (16) | 71 | 190 | 185 | 14.48 (2100) |
| 13.7 | 137 (450) | 22.9 (9) | 32.4 (19.9) | 312 (593) | 833 (32.8) | 71 | 190 | 181 | 13.38 (1940) |
| 13.7 | 137 (450) | 33.0 (13) | 37.8 (23.2) | 303 (577) | 775 (30.5) | 75 | 190 | 187 | 14.48 (2100) |
| 13.7 | 137 (450) | 33.0 (13) | 39.2 (24.1) | 310 (590) | 785 (30.9) | 78 | 190 | 187 | 13.65 (1980) |
| 13.7 | 137 (450) | 22.9 (9) | 36.8 (22.6) | 309 (589) | 828 (32.6) | 74 | 190 | 187 | 13.38 (1940) |

(continued)

| Polymer MI | Speed (m/min (ft/min)) | Air Gap (cm (inches)) | PE Weight (g/m² (pds. per ream)) | Melt Temp (°C (°F)) | TMI Foam (μm (mils)) | MD Shrink % | Extruder RPM | Extruder Amps | Extruder (mPa (PSI)) |
|---|---|---|---|---|---|---|---|---|---|
| 13.7 | 91 (300) | 22.9 (9) | 37.1 (22.8) | 308 (587) | 846 (33.3) | 88 | 126 | 149 | 10.96 (1590) |
| 13.7 | 91 (300) | 22.9 (9) | 56.8 (34.9) | 312 (593) | 701 (27.6) | 84 | 200 | 200 | 13.51 (1960) |
| 13.7 | 137 (450) | 33.0 (13) | 38.7 (23.8) | 310 (590) | 828 (32.6) | 81 | 190 | 187 | 13.51 (1960) |
| 13.7 | 91 (300) | 33.0 (13) | 39.9 (24.5) | 309 (588) | 318 (32.2) | 97 | 126 | 147 | 11.03 (1600) |
| 13.7 | 91 (300) | 33.0 (13) | 60.5 (37.2) | 313 (595) | 706 (27.8) | 86 | 200 | 196 | 13.51 (1960) |
| 13.7 | 137 (450) | 33.0 (13) | 40.5 (24.9) | 302 (575) | 830 (32.9) | 91 | 190 | 187 | 14.41 (2090) |
| 13.7 | 91 (300) | 33.0 (13) | 41.8 (25.7) | 297 (566) | 820 (32.3) | 92 | 126 | 149 | 12.14 (1760) |
| 13.7 | 137 (450) | 22.9 (9) | 38.3 (23.5) | 303 (577) | 818 (32.2) | 82 | 190 | 187 | 14.13 (2050) |
| 13.7 | 91 (300) | 22.9 (9) | 39.1 (24) | 297 (567) | 813 (32) | 78 | 126 | 150 | 11.93 (1730) |

**Table 6**

| Foam Caliper of 5.7 MI LDPE With Different Web Speeds and Melt Temperatures 27.9 cm (11") Air Gap, 508 μm (20 mil) Die Gap | | | | |
|---|---|---|---|---|
| | Caliper after Foaming μm (mils) | | | |
| **Poly Weight g/m² (pouds/cm).** | **137m/min-316°C (450fpm - 600°F)** | **137m/min-289°C (450fpm - 570°F)** | **91m/min-316°C (300fpm - 600°F)** | **91m/min-299°C (300fpm - 570°F)** |
| 46.4 (28.5) | 668 (26.3) | | | |
| 44.9 (27.6) | 676 (26.6) | | | |
| 44.6 (27.4) | 686 (27) | | | |
| 39.4 (24.2) | 707 (27.6) | | | |
| 36.9 (22.7) | 688 (27.1) | | | |
| 32.4 (19.9) | 658 (25.9) | | | |
| 28.0 (17.2) | 572 (22.5) | | | |
| 23.4 (14.4) | 513 (20.2) | | | |
| 48.0 (29.5) | | 681 (26.8) | | |
| 46.9 (28.8) | | 660 (26) | | |
| 39.1(24) | | 640 (25.2) | | |
| 33.5 (20.6) | | 584 (23) | | |
| 29.8 (18.3) | | 554 (21.8) | | |
| 24.1 (14.8) | | 503 (19.8) | | |
| 45.7 (28.1) | | | 749 (29.5) | |
| 43.1 (26.5) | | | 739 (29.1) | |
| 37.4 (23) | | | 701 (27.6) | |
| 33.5 (20.6) | | | 663 (26.1) | |
| 28.8 (17.7) | | | 612 (24.1) | |
| 25.4 (15.6) | | | 544 (21.4) | |
| 49.3 (30.3) | | | | 747 (29.4) |
| 44.4 (27.3) | | | | 726 (28.6) |
| 40.9 (25.1) | | | | 686 (27) |
| 36.5 (22.4) | | | | 632 (24.9) |
| 31.9 (19.6) | | | | 597 (23.5) |
| 38.0 (17.2) | | | | 546 (21.5) |

**Table 7**

| Foam Caliper 5.7 MI LDPE With Different Melt Temperatures 27.9cm (11") Air Gap, 508 μm (20 mil) Die Gap, 91 m/min (300 fpm) Web Speed | | | |
|---|---|---|---|
| | Caliper after Foaming μm (mils) | | |
| **Poly Weight g/m$^2$ (pounds/cm)** | **Trial 1 91m/min - 316°C (300fpm - 600°F)** | **Trial 2 91m/min - 316°C (300fpm - 600°F)** | **Trial 3 91m/min - 299°C (300fpm - 570°F)** |
| 38.3 (23.5) | 757 (29.8) | | |
| 38.9 (23.9) | 691 (27.2) | | |
| 39.1 (24) | 686 (27) | | |
| 40.4 (24.8) | 729 (28.7) | | |
| 41.7 (25.6) | 719 (28.3) | | |
| 42.3 (26) | (737) (29) | | |
| 52.7 (32.4) | 678 (26.7) | | |
| 34.8 (21.4) | 693 (27.3) | | |
| 51.4 (31.6) | 478 (18.8) | | |
| 39.9 (24.5) | 686 (27) | | |
| 45.7 (28.1) | | 749 (29.5) | |
| 43.1 (26.5) | | 739 (29.1) | |
| 37.4 (23) | | 701 (27.6) | |
| 33.5 (20.6) | | 663 (26.1) | |
| 28.8 (17.7) | | 612 (24.1) | |
| 25.4 (15.6) | | 544 (21.4) | |
| 49.3 (30.3) | | | 747 (29.4) |
| 44.4 (27.3) | | | 726 (28.6) |
| 40.9 (25.1) | | | 686 (27) |
| 36.5 (22.4) | | | 632 (24.9) |
| 31.9 (19.6) | | | 597 (23.5) |
| 28.0 (17.2) | | | 546 (21.5) |

**Table 8**

| 5.7 MI LDPE With Different Melt Temperatures 27.9 cm (11") Air Gap, 508 μm (20 mil) Die Gap, 137 m/min (450 fpm) Web Speed | | | |
|---|---|---|---|
| | Caliper after Foaming (mils) | | |
| **Poly Weight g/m$^2$ (pounds/cm)** | **Trial 1 137m/min - 316°C (450fpm - 600°F)** | **Trial 2 137m/min - 316°C (450fpm - 600°F)** | **Trial 2 137m/min - 299°C (450fpm - 570°F)** |
| 29.5 (18.1) | 709 (27.9) | | |
| 31.4 (19.3) | 752 (29.6) | | |
| 35.0 (21.5) | 780 (30.7) | | |
| 36.3 (22.3) | 790 (31.1) | | |

(continued)

| 5.7 MI LDPE With Different Melt Temperatures 27.9 cm (11") Air Gap, 508 μm (20 mil) Die Gap, 137 m/min (450 fpm) Web Speed | | | |
|---|---|---|---|
| | Caliper after Foaming (mils) | | |
| **Poly Weight g/m$^2$ (pounds/cm)** | **Trial 1 137m/min - 316°C (450fpm - 600°F)** | **Trial 2 137m/min - 316°C (450fpm - 600°F)** | **Trial 2 137m/min - 299°C (450fpm - 570°F)** |
| 37.3 (22.9) | 699 (27.5) | | |
| 39.1 (24) | 701 (27.6) | | |
| 41.3 (25.4) | 691 (27.2) | | |
| 40.9 (25.1) | 706 (27.8) | | |
| 46.4 (28.5) | | 668 (26.3) | |
| 44.9 (27.6) | | 676 (26.6) | |
| 44.6 (27.4) | | 686 (27) | |
| 39.4 (24.2) | | 701 (27.6) | |
| 36.9 (22.7) | | 688 (27.1) | |
| 32.4 (19.9) | | 658 (25.9) | |
| 28.0 (17.2) | | 572 (22.5) | |
| 23.4 (14.4) | | 513 (20.2) | |
| 48.0 (29.5) | | | 681 (26.8) |
| 46.9 (28.8) | | | 660 (26) |
| 39.1 (24) | | | 640 (25.2) |
| 33.5 (20.6) | | | 584 (23) |
| 29.8 (18.3) | | | 554 (21.8) |
| 24.1 (14.8) | | | 503 (19.8) |

**Table 9**

| 5.7 MI LDPE at Different Extrusion Speeds | | |
|---|---|---|
| | Caliper after Foaming (mils) | |
| **Poly Weight g/m$^2$ (pounds/rm)** | **91m/min (300 fpm)** | **137m/min (450 fpm)** |
| 29.5 (18.1) | | 709 (27.9) |
| 31.4 (19.3) | | 752 (29.6) |
| 34.8 (21.4) | 693 (27.3) | |
| 35.0 (21.5) | | 780 (30.7) |
| 36.3 (22.3) | | 790 (31.1) |
| 37.3 (22.9) | | 699 (27.5) |
| 38.3 (23.5) | 757 (29.8) | |
| 38.9 (23.9) | 691 (27.2) | |
| 39.1 (24) | 686 (27) | |
| 39.1 (24) | | 701 (27.6) |

(continued)

| 5.7 MI LDPE at Different Extrusion Speeds | | |
|---|---|---|
| | Caliper after Foaming (mils) | |
| Poly Weight g/m$^2$ (pounds/rm) | 91m/min (300 fpm) | 137m/min (450 fpm) |
| 39.9 (24.5) | 686 (27) | |
| 40.4 (24.8) | 729 (28.7) | |
| 40.9 (25.1) | | 706 (27.8) |
| 41.3 (25.4) | | 691 (27.2) |
| 41.7 (25.6) | 719 (28.3) | |
| 42.3 (26) | 737 (29) | |
| 51.4 (31.6) | 478 (18.8) | |
| 52.7 (32.4) | 678 (26.7) | |

Table 10

| Foam Caliper of 13.7 MI LDPE | | |
|---|---|---|
| | Caliper after Foaming μm (mils) | |
| Poly Weight g/m$^2$ (pounds/rm) | 91m/min (300 fpm) | 137m/min (450fpm) |
| 32.4 (19.9) | | 833 (32.8) |
| 35.3 (21.7) | 759 (29.9) | |
| 36.0 (22.1) | | 406 (16) |
| 36.8 (22.6) | | 828 (32.6) |
| 37.1 (22.8) | 846 (33.3) | |
| 37.8 (23.2) | | 775 (30.5) |
| 37.9 (23.3) | 869 (34.2) | |
| 38.3 (23.5) | | 818 (32.2) |
| 38.7 (23.8) | | 828 (32.6) |
| 39.1 (24) | 813 (32) | |
| 39.2 (24.1) | | 785 (30.9) |
| 39.9 (24.5) | 818 (32.2) | |
| 40.5 (24.9) | | 836 (32.9) |
| 40.7 (25) | 785 (30.9) | |
| 40.9 (25.1) | 757 (29.8) | |
| 41.8 (25.7) | 820 (32.3) | |
| 45.6 (28) | 775 (30.5) | |
| 51.6 (31.7) | 734 (28.9) | |
| 56.8 (34.9) | 701 (27.6) | |
| 60.5 (37.2) | 706 (27.8) | |

**Table 11**

| Foam Caliper of 4.5 MI LDPE | | |
|---|---|---|
| | Caliper after Foaming μm (mils) | |
| **Poly Weight g/m² (pounds/rm)** | **137m/min (450fpm)** | **91m/min (300fpm)** |
| 35.6 (21.9) | 556 (21.9) | |
| 35.8 (22) | 483 (19) | |
| 36.6 (22.5) | 579 (22.8) | |
| 41.2 (25.3) | | 653 (25.7) |
| 41.3 (25.4) | | 658 (25.9) |
| 43.5 (26.7) | | 693 (27.3) |
| 57.3 (35.2) | | 483 (19) |
| 57.8 (35.5) | | 485 (19.1) |

**Table 12**

| Foam Caliper of 12.0 MI LDPE | | |
|---|---|---|
| | Caliper after Foaming μm (mils) | |
| **g/m² Poly Weight g/m² (pounds/rm)** | **91m/min (300fpm)** | **137m/min (450fpm)** |
| 36.1 (22.2) | | 833 (32.8) |
| 37.8 (23.2) | 787 (31) | |
| 38.7 (23.8) | 782 (30.8) | |
| 39.4 (24.2) | | 790 (31.1) |
| 39.4 (34.2) | 772 (30.4) | |
| 39.7 (24.4) | | 759 (29.9) |
| 42.0 (25.8) | | 841 (33.1) |
| 43.5 (26.7) | 770 (30.3) | |
| 56.3 (34.6) | 624 (24.58) | |
| 57.0 (35) | 566 (22.3) | |

**Table 13 Comparison of Foam Caliper for Various MI Polymers**

| Polymer | Melt Index (g/10min) | Average Caliper after Foaming μm (mils) |
|---|---|---|
| 478 | 4.5 | 625 (24.6) |
| 479 | 5.7 | 711 (28) |
| 482 | 12 | 785 (30.9) |
| 476 | 13.7 | 795 (31.3) |

In Table 13, the LDPE polymer was applied at 40.7g/m² (25 pounds per ream) at 137 m/min (450 fpm).

Photomicrographs of foamed composites appear in **Figures 3** through **6**. In **Figure 3** a foam-paperboard laminate is shown that was coated as noted above and subsequently foamed at approximately 130° C in an oven for about 1 to 2 minutes. The foamable LDPE used in **Figures 3** and **4** was 5.7 g/10 min MI LDPE. The sample in **Figure 3** was coated at 61 m/min (200 ft/min), whereas the sample shown in **Figure 4** was coated at a web speed of 137 m/min (450 ft/min). It will be appreciated from the photomicrographs that the foam of **Figure 3** had a regular foam structure wherein the cells have a like horizontal span and a relatively high aspect ratio (an average aspect ratio of greater than about 2.5 as measured across a cross-section of the foam-paperboard laminate at an area defined by 100 X or 500 X on an SEM). The aspect ratio referred to here is the height of the cell away from the paperboard divided by its average width (horizontal or parallel to the board).

In **Figure 4** it is seen that the paperboard that was extrusion coated with LDPE at higher speed without optimized extrusion conditions resulted in foam having an irregular pattern. The foam appears as large macrovoids which appear to comprise agglomerated or merged cells that have are quite large and have a low aspect ratio. These macrovoids have horizontal spans much larger than the remainder of the foam.

**Figures 5** and **6** are photomicrographs of samples of LDPE with a MI of 5.7. The sample of **Figure 5** was coated at 61 m/min (200 ft/min) prior to foaming, whereas the sample in **Figure 6** was coated at a web speed of 137 m/min (450 ft/min). Here it is seen that even at the high speeds of 137 m/min (450 ft/min), the foam prepared from a MI of 12.0 had a generally regular structure consisting essentially of higher aspect ratio foam cells.

There is shown in **Figure 7** a plot of caliper after foaming in μm (mils) versus the LDPE coat weight in g/$m^2$ (pounds per ream) at different coating speeds for the 5.7 MI polymer utilizing an air gap of 27.9 cm (11 inches) and 508 μm (20 mil) extruder die gap. It is seen in **Figure 7** that the 5.7 MI LDPE deposits coated at 91 m/min (300 ft/min) generally had a higher caliper after foaming than did the paperboard coated at 137 m/min (450 ft/min) at a coat weight above about 35.8 g/$m^2$ (22 pounds per ream). It is also seen in **Figure 7** that a decrease in melt temperature during coating adversely affected caliper at any LDPE coat weight.

**Figure 8** is another plot of caliper of the foam-paperboard laminates after foaming in mils versus extruded LDPE coat weight in g/$m^2$ (pounds per ream). Here it is also seen that lower melt temperatures also decreased caliper generally, all other things being equal.

**Figure 9** is another plot of caliper after foaming versus polymer coat weight in g/$m^2$ (pounds/reams) for the 5.7 MI LDPE. It is confirmed in **Figure 9** that the higher melt temperatures produced a higher caliper, up to a LDPE coat weight of about 45.6 g/$m^2$ (28 pounds per ream).

**Figure 10** is another plot of caliper after foaming in μm (mils) versus LDPE extrusion coat weigh in g/$m^2$ (pounds per ream) for 5.7 MI LDPE at optimized die gap and air gap conditions. Here it is seen that relatively high calipers are achieved with low coat weight. This is an unexpected and very useful result; especially with increasing polymer costs.

**Figure 11** is a plot of caliper after foaming for the 13.7 MI LDPE. Here it is seen that the effect of coat weight on foam caliper is more significant. In particular, the higher melt index polymer produced surprisingly high caliper *in*

*situ* foam-paperboard laminates at lower coat weights. Further, significantly, this higher melt index polymer foamed well when coating at web speeds of up to about 137 m/min (450 fpm) were used. Previous experiments had shown that higher web speeds resulted in a degradation of foam height and quality.

**Figure 12** is a plot of caliper after foaming of the foam-paperboard laminates versus coat weight for a 4.5 MI LDPE tested. Here is seen that the calipers were quite low as opposed to the higher melt index polymers, regardless of coat weight.

**Figure 13** is another plot of caliper after foaming of the foam-paperboard laminates versus coat weight for a LDPE having a MI of about 12.0. Here it is seen that high calipers were achieved with coat weights below 40.7 g/$m^2$ (25 pounds per ream) at web speeds of 91 m/min (300 feet per minute) and 137 m/min (450 feet per minute).

**Figure 14** is a plot of average caliper after foaming of the foam-paperboard laminates versus polymer melt index in g/10 min. Here it is seen that the average caliper after foaming increased substantially as the melt index of the LDPE was increased at similar and preferred process conditions. The LDPE coat weight of this example was 40.7 g/$m^2$ (25 pounds per ream).

The influence of polymer coat weight selection and coating conditions on the characteristics of the *in situ* foams later produced by heating of the fabricated container is further appreciated by considering **Figures 15A-20B.**

**Figure 15A** is a surface SEM of a foamed composite wherein the foamed coating was produced from 5.7 MI LDPE extrusion coated a coat weight of 48.8 g/$m^2$ (30 pounds per ream). The LDPE was applied to the board at a web speed of 137 m/min (450 feet per minute) using a 1016 μm (40 mil) die gap and 12.7 cm (5") air gap. It is seen in **Figure 15A** that the foam cells have considerable MD ratio, that is, are elongated in the machine direction when viewed from top to bottom in the photograph.

**Figure 15B** (comparative) is a view in section of the foam layer of **Figure 15A,** wherein the cross machine direction is from left to right and wherein it is seen that the foam is irregular, with large foam cells of low aspect ratio.

**Figure 16A** is a surface SEM of a foamed composite sample using the same 5.7 MI LDPE as in **Figures 15A** and **15B** at the same coat weight and coating speed, however, the air gap was increased to 22.9 cm (9") and the die gap reduced to 508 μm (20 mils). Here there is seen much less MD ratio (top to bottom in the photograph) elongation of the foam cells. **Figure 16B** is an SEM in section of the foam of **Figure 16A** (cross machine direction left to right) and it is seen that the foam microstructure is considerably more regular.

**Figures 17A** through **20B** further illustrate the influence of polymer selection and coat weight on the resulting foam-paperboard laminates. **Figures 17A, 18A, 19A** and **20A** are surface SEMs wherein the machine direction of the paperboard web is from top to bottom, while **Figures 17B, 18B, 19B** and **20B** are SEMs of foam sections, wherein the cross machine direction of the coated web is from left to right. Polymers utilized in each case and coating conditions are indicated in Table 14 below. In all cases the die gap was 508 μm (20mils).

**Table 14**

| Extruded LDPE Coating Comparison | | | | |
|---|---|---|---|---|
| **Figures** | **Polymer** | **Coat weight** | **Air Gap** | **Web Speed** |
| 17A, 17B | 5.7 MILDPE (comparative) | 35.8 g/m$^2$ (22 pounds/ream) | (13") 33.0cm | (450 fpm) 137 m/min |
| 18A, 18B | 13.7 MI LDPE | 39.1 g/m$^2$ (24 pounds/ream) | (13") 33.0 cm | (450 fpm) 137 m/min |
| 19A, 19B | 4.5 MILDPE (comparative) | 35.8 g/m$^2$ (22 pounds/ream) | (9") 22.9 cm | (450 fpm) 137 m/min |
| 20A, 20B | 12.0 MILDPE | 42.3 g/m$^2$ (26 pounds/ream) | (13") 33.0 cm | (450 fpm) 137 m/min |

In **Figures 17A** and **17B**, it is seen that good quality coatings are produced with the 5.7 MI LDPE using a large air gap, a small die gap and a coating speed of 137 m/min (450 feet per minute). Likewise, it is seen in **Figures 18A** and **18B,** that good quality coatings are produced under similar conditions with the 13.7 MI LDPE. On the other hand, it is seen in **Figures 19A** and **19B,** that under these conditions, the 4.5 melt index LDPE would not foam properly; there were large areas of unfoamed polymer. Finally, it is seen in **Figures 20A** and **20B,** that the 12.0 MI LDPE produced excellent *in situ* foamed coatings from extruded coatings coated at 137 m/min (450 fpm).

The present invention was tested at a commercial facility in order to confirm that manufacturing speeds could be increased in accordance with the invention. Composite production speeds were increased to 122 m/min (400 fpm). Air gap was increased, die gap and coat weight were decreased in order to achieve the incremental production.

Without intending to be bound by any theory, it is believed that adhesion of the coating to the paperboard as well as polymer orientation, coat weight and viscosity in the melt influence the foaming properties of the polymer coating of foam-paperboard laminates prepared from the *in situ* process.

It has been reported in literature that polymer orientation is highly correlated to elongational strain; see Toft, N. and Rigdahl, M., "Influence of Extrusion Coating Conditions on Structure and Tensile Properties of Polyethylenes, International Journal of Polymeric materials, 53:809-828, (2004); which notes that

- Increasing web speed ($v_1$) during extrusion increases % shrink in the MD direction. This increase in % shrink is related to polymer orientation which is created at higher web speeds.
- Polymer orientation is highly correlated to elongational strain (ε), which is a function of air gap (h), extruder rotational speed ($v_0$) and web speed ($v_1$).

The relationship can be expressed as follows:

$$\varepsilon = (v_1 / h)(\ln(v_1 / \dot{v}_0))$$

It is seen in the data, Table 5 in particular, that increasing the web speed during extrusion increases the percent shrink in the MD direction. This increase in shrink, or decrease in shrink resistance, is believed to be related to polymer orientation, which is created at higher web speeds. In any event, the shrink resistance has been found by the inventors herein to correlate generally with foam caliper.

The melt temperature of the LDPE has been found to strongly influence ultimate foam quality, reinforcing the qualitative observation that coatings that were strongly adhered to the paperboard tended to produce better foams. Methods of promoting adhesion that might be employed include increasing coat weight, increasing melt temperature or treating the paperboard surface (by corona treatment, for example). While a precise threshold of adhesion for superior foaming may vary depending on the materials and conditions employed, it is believed that the more contact points between the foamed coating and the paperboard substrate, the better the foam quality and less material required for a given thickness. More contact points likely exist after foaming of the LDPE if the coating is strongly adhered prior to foaming. Unfoamed coating adhesion exceeding so called "fiber tear" strength is preferred, wherein the will not separate from the substrate without removing substantial amounts of fiber. If a peeled coating from paperboard contains fiber from the board surface which is readily observed, then adhesion between the coating and the board is probably adequate for good foaming.

Melt index and coat weight results suggest that resistance to flow in the polymer coating as it is foamed *in situ* plays an important role as well. Higher melt index foams are unexpectedly superior, when all other variables are kept constant. Thinner coatings (especially thinner higher melt index coatings) tend to foam better than like thicker coatings, producing thicker coatings at lower coat weight. Here again is an unexpected result suggesting effects of melt rheology are important and may override any adverse effect on adhesion by lowering the coat weight, provided that adhesion is adequate. The coat weight effect on *in situ* foaming may be related to stiffness of the unfoamed coating that is strongly related to caliper. Bending stiffness is generally proportional to the caliper of a coating to the third power. Thus, coat weights of less than about 40.7 g/$m^2$ (25 pounds per ream) are possible with weights of from about 32.6 g/$m^2$ (20) to about 40.7 g/$m^2$ (25 pounds per ream) being suitable to obtain good quality foam (that is, high aspect ratio foam with good adhesion). This coat weight is markedly below the coat weight of the prior art *in situ* process where a coat weight of around 48.8 g/$m^2$ (30 pounds per ream) were specified.

**B. LASER TOPOGRAPHY OF BEVERAGE CUPS PREPARED FROM THE FOAM-PAPERBOARD LAMINATES**

The surface of cups having *in situ* formed LDPE foamed coatings prepared as discussed above were laser-profiled using the Taylor Hobson - Talysurf CLI 1000 Scanning Laser Profilometer fitted with a 10 mm triangulation gauge. A surface 5 mm by 5 mm was collected using a lateral resolution of 5 μm in both the MD and CD directions and a gauge resolution of 0.17 μm. The samples were oriented with the X axis corresponding to the machine direction (stock curvature in the cross-machine direction).

After data collection, each sample dataset was processed with standard software as follows: 1.) missing data was filled using a technique employing a morphological dilation operation and substitution based on interpolation of a smoothed shape calculated from the neighborhood of the missing points; 2.) stock curvature was removed by fitting a 2nd order polynomial to the surface; 3.) the Z-axis was inverted in order to present the data a positive image; 4.) The dataset was spatially filtered (median 3 by 3 kernel) to eliminate ultra-fine scale texture.

The texture aspect ratio, Str, assumes values between 0 and 1, with 1 representing an isotropic surface. "Isotropy" as that term is used herein refers to the laser Str value measured as described above, or may be expressed in percent (Str X 100%). For example, a sample with an Str value of 0.75 has an isotropy of 0.75 or 75%. Texture direction, Std, assumes values between -90 and 90 with 0 aligned with the cross-machine direction. This parameter has meaning when Str assumes values less than 0.5.

Planarity was assessed by the magnitude of the developed surface, Sdr. This parameter will assume a value of 0% for a flat surface: the more convoluted the surface, the higher the value of Sdr. The density of peaks, SPc, measures the number of peaks per square millimeter that extend above C2 and below C1. Both C2 and C1 are expressed relative to the surface mean plane. Default values of 0.01 mm and 0.001 mm were used for C2 and C1, respectively. This parameter measures the uniformity of the surface relative to the specified thresholds C2 and C1.

Details as to particular samples and results appear in Table 15 below.

**Table 15 - Laser Imaging Data**

| | | | | | | | | Planarity | |
|---|---|---|---|---|---|---|---|---|---|
| Sample ID | Coating Speed m/min (fpm) | MI (g/10 min) | Air Gap cm (inches) | Die Gap µm (mils) | Coatweight g/m² (lb/ream) | Str (Isotropy) | Std (degrees) | SPc (peaks/mm2) | Sdr (percent) |
| 1_130 | 61 (200) | 5.7 | 12.7 (5) | 508 (20) | 48.8 30 | 0.486 | 26.5 | 9.3 | 1287 |
| 11 | 137 (450) | 5.7 | 33.0 (13) | 508 (20) | 35.8 22 | 0.537 | *-63.5* | 28.7 | 1733 |
| 11_130 | 137 (450) | 5.7 | 12.7 (5) | 1016 (40) | 48.8 30 | 0.225 | -85.0 | 14.1 | 1055 |
| 13_130 | 137 (450) | 5.7 | 22.9 (9) | 508 (20) | 48.8 30 | 0.398 | 63.5 | 20.1 | 1434 |
| 15_NTC_2 | 91 (300) | 5.7 | 27.9 (11) | 508 (20) | 39.1 24 | 0.474 | 63.5 | 15.7 | 1192 |
| 17_130 | 61 (200) | 10 | 12.7 (5) | 508 (20) | 48.8 30 | 0.491 | -82.0 | 19.0 | 1034 |
| 19 | 91 (130) | 13.7 | 22.9 (9) | 508 (20) | 40.7 25 | 0.511 | *85.0* | 12.2 | 1447 |
| 21_NTC_2 | 91 (300) | 5.7 | 27.9 (11) | 508 (20) | 39.1 24 | 0.463 | 86.0 | 19.4 | 1258 |
| 27_130 | 137 (450) | 10 | 12.7 (5) | 508 (20) | 48.8 30 | 0.309 | -63.5 | 15.5 | 1199 |
| 29_130 | 137 (450) | 10 | 22.9 (9) | 508 (20) | 48.8 30 | 0.507 | *63.5* | 14.6 | 1525 |
| 3 | 91 (300) | 5.7 | 22.9 (9) | 508 (20) | 52.1 32 | 0.539 | *-63.5* | 33.4 | 1512 |
| 3_NTC_2 | 137 (450) | 5.7 | 27.9 (11) | 508 (20) | 39.1 24 | 0.369 | 86.0 | 16.7 | 1264 |
| 32 | 137 (450) | 13.7 | 33.0 (13) | 508 (20) | 39.1 24 | 0.626 | *63.5* | 9.56 | 1192 |
| 39 | 91 (300) | 4.5 | 22.9 (9) | 508 (20) | 43.9 27 | 0.523 | *71.5* | 16.4 | 1438 |
| 46 | 137 (450) | 4.5 | 22.9 (9) | 508 (20) | 35.8 22 | 0.249 | -85.0 | 13.9 | 358 |
| 49 | 91 (300) | 12 | 22.9 (9) | 508 (20) | 57.0 35 | 0.590 | *63.5* | 17.8 | 1282 |
| 50 | 137 (450) | 12 | 33.0 (13) | 508 (20) | 42.3 26 | 0.639 | *-63.5* | 8.59 | 1267 |
| 9_NTC_2 | 137 (450) | 5.7 | 27.9 (11) | 508 (20) | 39.1 24 | 0.366 | 78.5 | 18.8 | 1164 |

It is seen in Table 15 that the laser profilometer analyses are consistent with observations made from the photomicrographs. Generally, satisfactory foams had Str (isotropy) values of from about 0.4 and 0.75. Values of greater than about 0.45 or 0.5 provide especially good foam. Str values of 0.55 and more were achieved consistently. Good coatings typically had a 0.01/0.001mm peak density of less than 20 peaks/$mm^2$ of surface area. Particularly good foams had 0.01/0.001mum peak densities of less than about 15 peaks/$mm^2$ with between 5 and 10 peaks/$mm^2$ being exhibited by some especially suitable extruded LDPE coatings.

Laser profiling of the cup surface is further appreciated by reference to **Figures 21A** through **21B. Figure 21A** is a laser scanned surface image of the *in situ* foam surface of sample 46 (4.5 MI, 137 m/min (450 fpm)) showing large, irregular cells. **Figure 21B** is an angular plot showing that isotropy is quite low.

**Figure 22A** is a laser scanned surface image of the foam of sample 50 (MI 12, 137 m/min (450 fpm)) showing a much finer microstructure than that of **Figure 21A. Figure 22B** is an angular plot showing a much more isotropic surface than is the case in **Figure 21B;** confirming the results seen in Table 15 and the accompanying photomicrographs.

**C. EXAMINATION OF EXTRUSION PARAMETERS EFFECT ON PROPERTIES OF FOAM-PAPERBOARD LAMINATES**

***1- Effect of processing parameters on foaming***

Experiments were conducted to determine the influence of air gap, die gap, extrusion speed and LDPE type on foaming level. The dependent parameter measured was foam caliper (as measured by total laminate thickness) while the independent variables were:

| | |
|---|---|
| Die gap: | 508 μm (20 mils) and 1016 μm (40 mils) |
| Air gap: | 13.3cm (5.25") and 23.5cm (9.25") |
| Extrusion Speed: | 61 m/min 200 fpm and 137 m/min (450 fpm) |
| Polymers: | LDPE polymer having MI of 5.7 (EC479, Westlake Chemical, Houston, TX) and LDPE polymer having MI of 10.0 (EC471, Westlake) |

The properties of the polymer used in this experiment are listed in Table 16.

TABLE 16: Analysis of 471 and EC 479 LDPE (Westlake Chemical)

| **Property** | **Units** | **Westlake EC471AA** | **Westlake EC479AA** |
|---|---|---|---|
| Melt $Index_{2.16}$ | g/10 min | 10.0 | 5.7 |
| Melt $Index_{21.6}$ | g/10 min | 342.0 | 226.3 |
| MFR $_{(21.6/2.16)}$ | - | 34.2 | 39.7 |
| Density | g/$cm^3$ | 0.9181 | 0.9215 |
| Initial Tension | | 34 | 63 |
| Extrusion Coefficient | | 340 | 359 |
| DSC Melt Point | °C | 106.8 | 110.7 |
| Heat of Fusion | J/c | 105.8 | 115.1 |
| Number Avg. Molecular Weight | | 21800 | 21200 |
| Weight Avg. Molecular Weight | | 361700 | 253600 |
| Molecular Weight Distribution | | 16.6 | 12.0 |

It was observed by the inventors that the higher melt index polymer generally provided increased foam caliper, all other variables being equal.

***2- Effect of extrusion melt temperature and coat weight on foam caliper***

Figure 23 shows foam caliper as a function of coat weight for 5.7 MI LDPE (Westlake EC 479) polymer at two different extrusion speeds and two different melt temperatures. The results confirmed that increasing melt temperature had a positive effect on foam caliper. The inventors herein therefore determined that increasing the temperature at which the polymer exits the die (extrusion melt temperature) improved foam caliper by increasing micro-level adhesion as well as allowing for molecular relaxation. However, the melt temperature needs to be below the decomposition temperature of the polymer.

Foam caliper increased as LDPE coating thickness (as measured by coat weight) increases. However, foam caliper reached a maximum at a certain thickness and decreased at higher LDPE coating thickness. This is believed to be the result of two opposing forces: the lower the coating thickness, the lower the flexural stiffness of the coating and the easier it is to deform. However, as coating thickness was decreased, the draw down ratio increased, thus resulting in higher residual stress in the extruded LDPE coating and reducing foam caliper.

***3- Effect of polymer properties on foam caliper***

**TABLE 17: Effect of polymer properties on final extruded LDPE coating properties**

| COATING PROPERTY | INCREASING MELT INDEX | INCREASING MWD | INCREASING DENSITY | INVENTORS' EXPERIMENTAL OBSERVATIONS |
|---|---|---|---|---|
| Tensile Properties | DECREASE | - | INCREASE | The lower the better for bubble formation. The higher the better for other extrusion applications |
| Impact Resistance | DECREASE | DECREASE | - | Not important for bubble formation, but important for common extrusion applications |
| Tear Strength | DECREASE | DECREASE | DECREASE | Not important for bubble Formation, but important for common extrusion applications |
| Heat Seal / Hot Tack / Temperature | DECREASE | - | INCREASE | Important for cup forming, but not bubble formation |
| Heat Seal / Hot Tack Range | DECREASE | INCREASE | DECREASE | Important for cup forming, but not bubble formation but not bubble formation |
| Drawdown Ability | INCREASE | INCREASE | - | Very important for bubble formation, not as much for common extrusion applications |
| Melt Strength | DECREASE | INCREASE | - | Very important in bubble formation, not as important in common extrusion applications |

(continued)

| COATING PROPERTY | INCREASING MELT INDEX | INCREASING MWD | INCREASING DENSITY | INVENTORS' EXPERIMENTAL OBSERVATIONS |
|---|---|---|---|---|
| ESCR | DECREASE | DECREASE | - | Not important for bubble formation, but important for common extrusion applications |

The inventors herein investigated the LDPE extruded coating properties significant to foam formation. These were found to include: lower stiffness, higher draw ability and higher melt strength.

It should be noted that when extruding LDPE for standard packaging grade LDPE extruded coating applications (that is, where the LDPE is not foamed), molecular orientation is desirable since it increases properties such as stiffness, tear resistance and tensile strengths well as improves oxygen and moisture vapor transmission rates. These properties are not of interest, and are actually undesirable, to prepare the foam-paperboard laminates of the present invention. It was found that increase of molecular orientation resulted in lower foam caliper.

Based on the above information, it was determined that it would be beneficial to increase the MI of the LDPE polymer to improve the resulting foam properties. To this end, two previously unexamined LDPE polymers having higher MI were selected for further investigation

**TABLE 18: Analysis of Westlake 482 and 476 LDPE Polymers**

| Property | Units | Westlake EC482AA | Westlake EC476AA |
|---|---|---|---|
| Melt Index$_{2.16}$ | g/10 min | 12.0 | 13.7 |
| Melt Index$_{21\cdot 6}$ | g/10 min | 391.2 | 453.4 |
| MFR $_{(21.6/2.16)}$ | - | 32.6 | 33.1 |
| Density | g/cm$^3$ | 0.9183 | 0.9180 |
| Initial Tension | | 28 | 28 |
| Extrusion Coefficient | | 336 | 384 |
| DSC Melt Point | °C | 106.2 | 104.9 |
| Heat of Fusion | J/c | 115.4 | 114.8 |
| Number Avg. Molecular Weight | | 18200 | 18000 |
| Weight Avg. Molecular Weight | | 291900 | 289700 |
| Molecular Weight Distribution | | 16.0 | 16.1 |

Based upon the inventors' previous determination of the somewhat counterintuitive effects of melt index and molecular weight distribution on foam caliper, the inventors investigated the effect of these parameters on foam caliper at equal speeds than the polymer used earlier. The inventors determined that using these higher MI polymers, higher foam calipers could be obtained at higher extrusion speeds using less polymer, as will be described further herein.

*4- Effect of polymer type and thickness on foam caliper*

To test the effects of polymer type at different polymer thickness on foam caliper, the LDPE having the melt indices set forth in Table 18 above were tested. Figure 24 shows that for the 12.0 MI LDPE and the 13.7 MI LDPE polymers, web speed did not influence foam caliper as seen with the 5.7 MI LDPE polymer having the lower MI. In addition, 13.7 MI LDPE polymer provided a higher foam caliper at equivalent web speed and extruded coat thickness when compared to the lower MI 12.0 MI LDPE polymer.

After obtaining these preliminary results, the inventors proceeded to investigate both the 12.0 MI LDPE and 13.7 MI LDPE polymers and to test these polymers in a manufacturing environment. Converting trials at a Georgia-Pacific extrusion facility validated the lab scale experimental results. The 12.0 MI LDPE polymer produced target foam caliper of about 762μm (30mil) (paperboard and foam) at only 40.7 g/$m^2$ (25 pounds/ream) of LDPE while the 13.7 MI LDPE polymer produced target foam caliper with only 32.6 g/$m^2$ (20 pounds /ream) of LDPE. In sum, these manufacturing scale results indicated that it was possible to obtain good foam qualities through use of a lighter extruded coat weight of LDPE.

***5- Effect of oven temperature and residence time on foaming***

In the manufacture of PerfecTouch insulated beverage cups using LDPE having a MI of 5.7, it was previously determined that the residence time and oven temperature had an effect on foam caliper and appearance, however, at that time it was not found possible to predict the influence of such factors on the resulting foam. At lower oven temperatures, it was observed that foam did not always meet thickness and quality targets.

The inventors examined the effects of oven parameters on resulting foam caliper in order to gain a better understanding of the foaming mechanism inside the oven and to identify a process to produce consistent foam appearance.

Based on how the higher MI LDPE's were found to behave, the inventors hypothesized that shorter residence time and /or oven temperature could be used to produce foam of a targeted caliper. In order to test this hypothesis, 5.7 MI, 12.0 MI and 13.7 LDPE polymers were extruded at 40.7 g/$m^2$ (25 pounds per ream) on SBS. The resulting foam caliper was analyzed under various oven temperatures and residence times.

Initially, the oven residence time tested ranged from 60 seconds to 180 seconds and the temperature ranged from 113°C (235 °F) to 129°C (265 °F). (Previous manufacturing conditions were 124°C (255 °F) oven temperature and residence time of 120 seconds using 5.7 MI LDPE). Results of R&D foam caliper measurements for the three polymers are shown in Figures 25 to 27.

At lower oven temperatures (113°C ((235 °F)), long residence times > 180 seconds are needed to initiate extruded polymer deformation for all types of LDPE examined. At 118°C (245 °F), polymer deformation and bubble formation is observed only for the "softer" polymer (MI 12.0). A temperature of 118°C (245 °F) was too low to produce optimal foam caliper.

Increasing the temperatures to 124°C (255°F) and 129°C (265 °F) resulted in a significant increase in bubble height in as quickly as 90 seconds. The 13.7 MI LDPE resulted in higher foam caliper than the 12.0 MI LDPE and 5.7 MI LDPE at similar conditions.

Figures 25-27 show that it is possible to decrease oven residence time if oven temperature is correspondingly increased. However, it was necessary to understand the limitations of increasing oven temperature and its affects on foam caliper and appearance.

To do so, the experiments were repeated for oven temperatures as high as 149°C (300 °F), the results of which are shown in Figures 28-30. Figures 28-30 should be interpreted with care. The 13.7 MI LDPE polymer reached higher foam caliper than the 12.0 MI LDPE polymer, which had higher caliper than the previously used LDPE polymer having a MI of 5.7. It also appeared that all LDPE polymers tested reached a maximum caliper at a certain residence time, which depended on the type of polymer and the temperature of the oven. For example, for the 12.0 MI LDPE polymer, the maximum caliper at the lower oven temperatures of 129°C (265 °F) and 135°C (275 °F) was reached after 60 seconds. This time is reduced to 45 seconds for the 141°C (285 °F) and 149°C (300 °F) oven temperature.

From these results, it might appear that oven residence time can be significantly reduced if the oven temperature was increased. However, the inventors herein found that foam appearance and insulation levels can be adversely affected by an increase in temperature.

In particular, it was determined that higher oven temperatures can cause abrupt increase in vapor pressure (that is, the steam forms and releases from the paperboard too quickly) under the polymer coating surface. This, in turn, resulted in a loss of foam quality. In addition, higher temperatures were found to decrease the viscosity of the polymer to result in coalescence of the bubbles under the surface or to the bursting of the bubbles.

These conclusions can be seen in the SEMs presented in Figure 31. The lower foam quality can be seen when comparing the 60 second micrograph with the 120 second photomicrograph at the 141°C (285 °F) and at 149°C (300 °F) oven temperatures.

While the invention has been described in connection with numerous examples, modifications to those examples within the scope of the invention will be readily apparent to those of skill in the art. In view of the foregoing discussion, relevant knowledge in the art and references including co-pending applications discussed above in connection with the Background and Detailed Description, further description is deemed unnecessary.

## Claims

1. A method of making a foam paperboard laminate comprising:

   a) providing paperboard (24) having an outer and an inner layer, wherein the paperboard has a moisture content of from 4 to 10%;
   b) providing a melted LDPE;
   c) applying the melted LDPE to the outer surface of the paperboard using an extruder (38), thereby providing a LDPE-coated paperboard material (24, 22a), wherein the speed of application is at least 107 m/min (350 ft/min); and
   d) heating the paperboard material (24, 22a) at from 104 °C (220 °F) to 166 °C (330 °F) for at least 30 seconds thereby resulting in release of the moisture from the paperboard (24) in the form of steam, wherein the amount of steam is sufficient to provide a LDPE foam (22), and wherein the foam is adhered to the paperboard surface, thereby providing a foam-paperboard laminate (24, 22),
   **characterized in that** the LDPE has a melt index of between 8.0 and 20.0 g/10 min as measured by ASTM 1298.

2. The method of making a foam paperboard laminate of claim 1, wherein the extrusion parameters and melt index of the LDPE are chosen such that at least 90% of the foam cells have an aspect ratio of 2.0 or greater.

3. The method of claim 1, wherein a polyolefin occlusive layer (26) is applied to an inner surface of the paperboard material (24) prior to heating of the paperboard material.

4. The method of claim 3, wherein the occlusive layer (26) comprises LDPE, HDPE or a blend thereof

5. The method of claim 1, wherein the melted LDPE (52) is applied to the paperboard (24) at less than 41 g/m$^2$ (25 pounds per ream).

6. The method of claim 1, wherein the extruder (38) has an air gap distance (44) of from 22.9 cm (9 inches) to 50.8 cm (20 inches).

7. The method of claim 1, wherein the extruder (38) has a die gap distance (42) of from 254 μm (10 mils) to 635 μm (25 mils).

8. The method of claim 1, wherein the web speed is from 107 m/min (350 feet per minute) to 274 m/min (900 feet per minute).

9. The method of claim 1, wherein the heating step is conducted for from 45 to 180 seconds.

10. The method of claim 1, wherein the heating step is conducted at from 121 °C (250 °F) to 163 °C (325 °F).

11. The method of claim 1, wherein the foam layer (22) comprises foam cells and wherein at least 90 % of the foam cells have an MD ratio of greater than 1.5.

12. The method of claim 1, wherein the LDPE is applied at a coat weight of from 29 g/m$^2$ (18 pounds per ream) to 44 g/m$^2$ (27 pounds per ream).

13. The method of claim 12, wherein the foam layer (22) has a caliper of 381 μm (15 mils) or less.

14. The method of claim 1, wherein the melt temperature of the LDPE is from 302 °C (575 °F) to 329 °C (625 °F).

15. A LDPE foam-paperboard laminate comprising:

   a) a first layer comprising a foam (22) prepared from LDPE ;
   b) a second layer comprising paperboard (24),
   c) wherein the laminate is prepared in an *in situ* process,

   **characterized in that** the foam prepared from LDPE has a melt index of from 8.0 to 20.0 g/10 min as measured by ASTM 1298.

16. The LDPE foam-paperboard laminate of claim 15, wherein the foam layer (22) comprises foam cells, wherein at least 90 % of the foam cells have an average MD ratio of less than 1. 5.

17. The foam-paperboard laminate of claim 15, wherein the laminate comprises a third layer comprising an occlusive layer (26) disposed on a surface of the paperboard (22) opposite to the foam layer (22).

18. The foam-paperboard laminate of claim 15, wherein the LDPE has a melt index of from 10.0 to 20.0 g/10 min.

19. The foam-paperboard laminate of claim 15, wherein the LDPE (22) is present on the paperboard at less than 49 g/$m^2$ (30 pounds per ream) of paperboard.

20. The foam-paperboard laminate of claim 15, wherein the foam layer (22) comprises foam cells, wherein the foam cells have an average MD ratio of less than 1.5.

21. An insulated container (10) prepared from the foam-paperboard laminate of claim 15.

22. A packaging material prepared from the foam-paperboard laminate of claim 15.

23. A slip-resistant material prepared from the foam-paperboard laminate of claim 15.

24. The LDPE foam-paperboard laminate of claim 15, wherein the foam layer comprises foam cells, wherein at least 90 % of the foam cells have an aspect ratio of 2.0 or greater.

25. The foam-paperboard laminate of claim 24, wherein the foam layer (22) has a caliper of less than 381 μm (15 mils).

26. The foam-paperboard laminate of claim 24, wherein at least 95 % of the foam cells have an aspect ratio of 2.0 or greater.

## Patentansprüche

1. Verfahren zur Herstellung eines Schaumstoff-Pappe-Laminats, bei dem man:

   a) Pappe (24) mit einer äußeren und einer inneren Schicht bereitstellt, wobei die Pappe einen Feuchtigkeitsgehalt von 4 bis 10% aufweist;
   b) ein geschmolzenes LDPE bereitstellt;
   c) das geschmolzene LDPE unter Verwendung eines Extruders (38) auf die äußere Oberfläche der Pappe aufbringt, wodurch ein mit LDPE beschichtetes Pappematerial (24, 22a) bereitgestellt wird, wobei die Aufbringungsgeschwindigkeit mindestens 107 m/min (350 ft/min) beträgt; und
   d) das Pappematerial (24, 22a) mindestens 30 Sekunden auf 104 °C (220 °F) bis 166 °C (330 °F) erhitzt, was zur Freisetzung von Feuchtigkeit von der Pappe (24) in Form von Wasserdampf führt, wobei die Wasserdampfmenge zur Bereitstellung eines LDPE-Schaumstoffs (22) ausreicht und wobei der Schaumstoff auf der Pappeoberfläche haftet,

   wodurch ein Schaumstoff-Pappe-Laminat (24, 22) bereitgestellt wird,
   **dadurch gekennzeichnet, daß** das LDPE einen gemäß ASTM 1298 gemessenen Schmelzindex zwischen 8,0 und 20,0 g/10 min aufweist.

2. Verfahren zur Herstellung eines Schaumstoff-Pappe-Laminats nach Anspruch 1, bei dem man die Extrusionsparameter und den Schmelzindex des LDPE so wählt, daß mindestens 90% der Schaumstoffzellen ein Aspektverhältnis von 2,0 oder mehr aufweisen.

3. Verfahren nach Anspruch 1, bei dem man vor dem Erhitzen des Pappematerials auf eine innere Oberfläche des Pappematerials (24) eine Polyolefin-Sperrschicht (26) aufbringt.

4. Verfahren nach Anspruch 3, bei dem die Sperrschicht (26) LDPE, HDPE oder eine Mischung davon umfaßt.

5. Verfahren nach Anspruch 1, bei dem man das geschmolzene LDPE (52) in einer Menge von weniger als 41 g/$m^2$

(25 Pounds pro Ries) auf die Pappe (24) aufbringt.

6. Verfahren nach Anspruch 1, bei dem der Extruder (38) einen Luftspaltabstand (44) von 22,9 cm (9 Zoll) bis 50,8 cm (20 Zoll) aufweist.

7. Verfahren nach Anspruch 1, bei dem der Extruder (38) einen Düsenspaltabstand (42) von 254 µm (10 Millizoll) bis 635 µm (25 Millizoll) aufweist.

8. Verfahren nach Anspruch 1, bei dem die Bahngeschwindigkeit 107 m/min (350 Feet pro Minute) bis 274 m/min (900 Feet pro Minute) beträgt.

9. Verfahren nach Anspruch 1, bei dem man den Erhitzungsschritt über einen Zeitraum von 45 bis 180 Sekunden durchführt.

10. Verfahren nach Anspruch 1, bei dem man den Erhitzungsschritt bei 121 °C (250 °F) bis 163 °C (325 °F) durchführt.

11. Verfahren nach Anspruch 1, bei dem die Schaumstoffschicht (22) Schaumstoffzellen umfaßt und mindestens 90% der Schaumstoffzellen ein MD-Verhältnis von mehr als 1,5 aufweisen.

12. Verfahren nach Anspruch 1, bei dem man das LDPE in einem Schichtgewicht von 29 g/$m^2$ (18 Pounds pro Ries) bis 44 g/$m^2$ (27 Pounds pro Ries) aufbringt.

13. Verfahren nach Anspruch 12, bei dem die Schaumstoffschicht (22) eine Stärke von 381 µm (15 Millizoll) oder weniger aufweist.

14. Verfahren nach Anspruch 1, bei dem die Schmelzetemperatur des LDPE 302 °C (575 °F) bis 329 °C (625 °F) beträgt.

15. LDPE-Schaumstoff-Pappe-Laminat mit:

a) einer ersten Schicht, die einen aus LDPE hergestellten Schaumstoff (22) umfaßt,
b) einer zweiten Schicht, die Pappe (24) umfaßt,
c) wobei das Laminat nach einem in-situ-Verfahren hergestellt wird,

**dadurch gekennzeichnet, daß** der aus LDPE hergestellte Schaumstoff einen gemäß ASTM 1298 gemessenen Schmelzindex zwischen 8,0 und 20,0 g/10 min aufweist.

16. LDPE-Schaumstoff-Pappe-Laminat nach Anspruch 15, bei dem die Schaumstoffschicht (22) Schaumstoffzellen umfaßt, wobei mindestens 90% der Schaumstoffzellen ein durchschnittliches MD-Verhältnis von weniger als 1,5 aufweisen.

17. Schaumstoff-Pappe-Laminat nach Anspruch 15, bei dem das Laminat eine dritte Schicht aufweist, die eine auf einer der Schaumstoffschicht (22) gegenüberliegenden Oberfläche der Pappe (22) angeordnete Sperrschicht (26) umfaßt.

18. Schaumstoff-Pappe-Laminat nach Anspruch 15, bei dem das LDPE einen Schmelzindex von 10,0 bis 20,0 g/10 min aufweist.

19. Schaumstoff-Pappe-Laminat nach Anspruch 15, bei dem das LDPE (22) auf der Pappe in einer Menge von weniger als 49 g/$m^2$ (30 Pounds pro Ries) Pappe vorliegt.

20. Schaumstoff-Pappe-Laminat nach Anspruch 15, bei dem die Schaumstoffschicht (22) Schaumstoffzellen umfaßt, wobei die Schaumstoffzellen ein durchschnittliches MD-Verhältnis von weniger als 1,5 aufweisen.

21. Isolierter Behälter (10), hergestellt aus dem Schaumstoff-Pappe-Laminat nach Anspruch 15.

22. Verpackungsmaterial, hergestellt aus dem Schaumstoff-Pappe-Laminat nach Anspruch 15.

23. Rutschfestes Material, hergestellt aus dem Schaumstoff-Pappe-Laminat nach Anspruch 15.

**24.** LDPE-Schaumstoff-Pappe-Laminat nach Anspruch 15, bei dem die Schaumstoffschicht Schaumstoffzellen umfaßt, wobei mindestens 90% der Schaumstoffzellen ein Aspektverhältnis von 2,0 oder mehr aufweisen.

**25.** Schaumstoff-Pappe-Laminat nach Anspruch 24, bei dem die Schaumstoffschicht (22) eine Stärke von weniger als 381 μm (15 Millizoll) aufweist.

**26.** Schaumstoff-Pappe-Laminat nach Anspruch 24, bei dem mindestens 95% der Schaumstoffzellen ein Aspektverhältnis von 2,0 oder mehr aufweisen.

**Revendications**

**1.** Procédé de fabrication d'un stratifié de carton alvéolaire comprenant :

a) la fourniture d'un carton (24) possédant une couche extérieure et une couche intérieure, dans laquelle le carton a une teneur en humidité de 4 à 10 % ;
b) la fourniture d'un PEBD fondu ;
c) l'application du PEBD fondu à la surface extérieure du carton en utilisant une extrudeuse (38), produisant ainsi un matériau en carton enduit de PEBD (24, 22a), dans laquelle la vitesse d'application est d'au moins 107 m/min (350 ft/min) ; et
d) le chauffage du matériau en carton (24, 22a) à une température de 104 °C (220 °F) à 166 °C (330 °F) pendant au moins 30 secondes, entraînant ainsi la libération de l'humidité du carton (24) sous la forme de vapeur, dans lequel la quantité de vapeur est suffisante pour donner un matériau alvéolaire en PEBD (22), et dans lequel le matériau alvéolaire est collé à la surface du carton, produisant ainsi un stratifié de carton alvéolaire (24, 22), **caractérisé en ce que** le PEBD possède un indice de fluidité entre 8,0 et 20,0 g/10 min tel que mesuré par la méthode ASTM 1298.

**2.** Procédé de fabrication d'un stratifié de carton alvéolaire de la revendication 1, dans lequel les paramètres d'extrusion et l'indice de fluidité du PEBD sont choisis de sorte qu'au moins 90 % des cellules alvéolaires présentent un rapport de forme de 2,0 ou plus.

**3.** Procédé de la revendication 1, dans lequel une couche occlusive de polyoléfines (26) est appliquée sur une surface intérieure du matériau en carton (24) avant le chauffage du matériau en carton.

**4.** Procédé de la revendication 3, dans lequel la couche occlusive (26) est constituée de PEBD, de PEHD ou d'un mélange de ceux-ci.

**5.** Procédé de la revendication 1, dans lequel le PEBD fondu (52) est appliqué au carton (24) en une quantité inférieure à 41 g/m$^2$ (25 1b par rame).

**6.** Procédé de la revendication 1, dans lequel l'extrudeuse (38) possède une distance d'intervalle d'air (44) de 22,9 cm (9 po) à 50,8 cm (20 po).

**7.** Procédé de la revendication 1, dans lequel l'extrudeuse (38) possède une distance de l'embouchure de la filière (42) de 254 μm (10 mils) à 635 μm (25 mils).

**8.** Procédé de la revendication 1, dans lequel la vitesse de la bande varie de 107 m/min (350 ft/min) à 274 m/min (900 ft/min).

**9.** Procédé de la revendication 1, dans lequel l'étape de chauffage est réalisée sur une période de 45 à 180 secondes.

**10.** Procédé de la revendication 1, dans lequel l'étape de chauffage est réalisée à une température de 121 °C (250 °F) à 163 °C (325 °F).

**11.** Procédé de la revendication 1, dans lequel la couche alvéolaire (22) comprend des cellules alvéolaires et dans lequel au moins 90 % des cellules alvéolaires possèdent un rapport SM supérieur à 1,5.

**12.** Procédé de la revendication 1, dans lequel le PEBD est appliqué à un poids d'enduit de 29 g/m$^2$ (18 1b par rame)

à 44 g/$m^2$ (27 1b par rame).

**13.** Procédé de la revendication 12, dans lequel la couche alvéolaire (22) est d'une épaisseur de 381 μm (15 mils) ou moins.

**14.** Procédé de la revendication 1, dans lequel la température de fusion du PEBD varie de 302 °C (575 °F) à 329 °C (625 °F).

**15.** Stratifié de carton alvéolaire en PEBD comprenant :

a) une première couche constituée d'un matériau alvéolaire (22) préparé à partir de PEBD ;
b) une deuxième couche constituée de carton (24);
c) dans lequel le stratifié est préparé dans un procédé *in situ*,

**caractérisé en ce que** le matériau alvéolaire préparé à partir de PEBD a un indice de fluidité de 8,0 à 20,0 g/10 min tel que mesuré par la méthode ASTM 1298.

**16.** Stratifié de carton alvéolaire en PEBD de la revendication 15, dans lequel la couche alvéolaire (22) comprend des cellules alvéolaires, dans lequel au moins 90 % des cellules alvéolaires possèdent un rapport SM moyen inférieur à 1,5.

**17.** Stratifié de carton alvéolaire de la revendication 15, dans lequel le stratifié comprend une troisième couche qui comprend une couche occlusive (26) disposée sur une surface du carton (22) opposée à la couche alvéolaire (22).

**18.** Stratifié de carton alvéolaire de la revendication 15, dans lequel le PEBD a un indice de fluidité de 10,0 à 20,0 g/10 min.

**19.** Stratifié de carton alvéolaire de la revendication 15, dans lequel le PEBD (22) est présent sur le carton en une quantité inférieure à 49 g/$m^2$ (30 1b par rame) de carton.

**20.** Stratifié de carton alvéolaire de la revendication 15, dans lequel la couche alvéolaire (22) comprend des cellules alvéolaires, dans lequel les cellules alvéolaires possèdent un rapport SM moyen inférieur à 1,5.

**21.** Contenant isotherme (10) préparé à partir du stratifié de carton alvéolaire de la revendication 15.

**22.** Matériau d'emballage préparé à partir du stratifié de carton alvéolaire de la revendication 15.

**23.** Matériau antidérapant préparé à partir du stratifié de carton alvéolaire de la revendication 15.

**24.** Stratifié de carton alvéolaire en PEBD de la revendication 15, dans lequel la couche alvéolaire comprend des cellules alvéolaires, dans lequel au moins 90 % des cellules alvéolaires possèdent un rapport de forme de 2,0 ou plus.

**25.** Stratifié de carton alvéolaire de la revendication 24, dans lequel la couche alvéolaire (22) possède une épaisseur inférieure à 381 μm (15 mils).

**26.** Stratifié de carton alvéolaire de la revendication 24, dans lequel au moins 95 % des cellules alvéolaires possèdent un rapport de forme de 2,0 ou plus.

FIG. 1

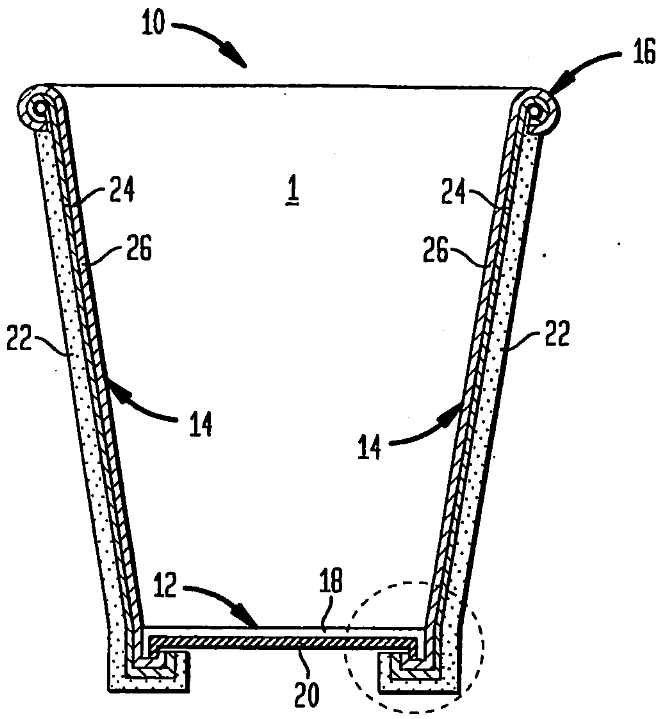


FIG. 1A

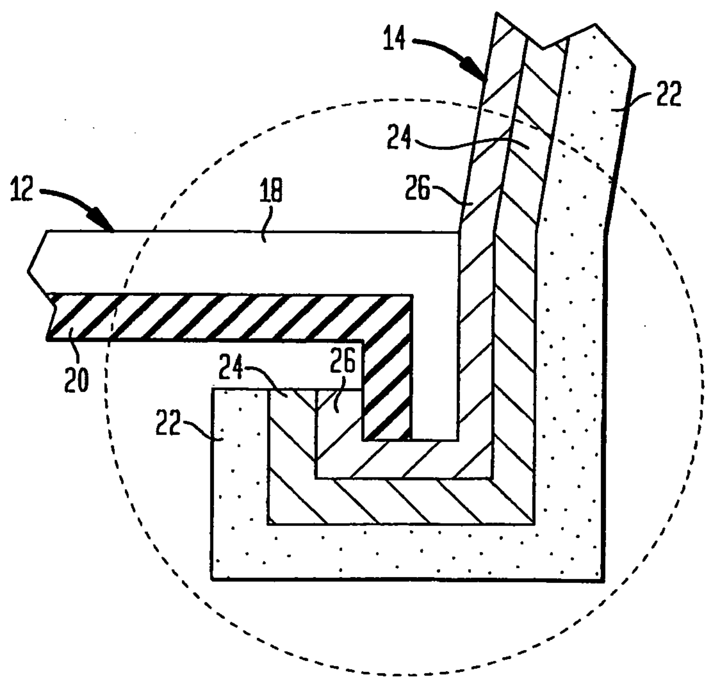

FIG. 2

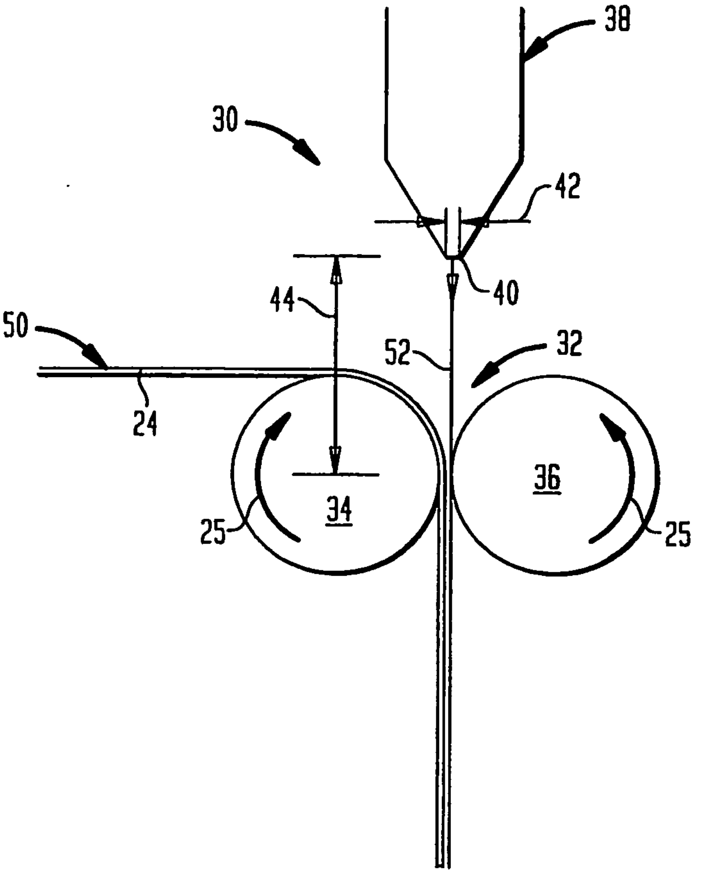


FIG. 2A

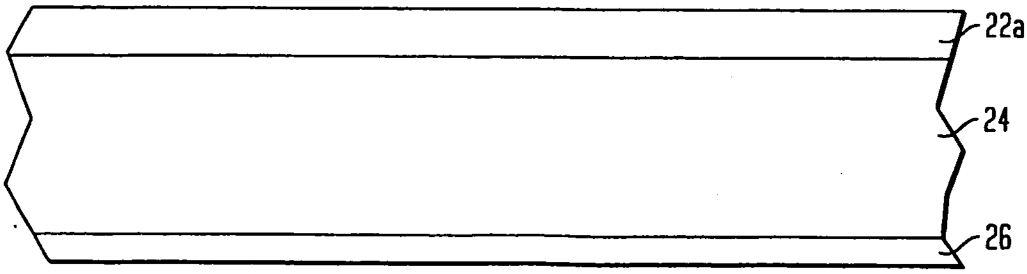

FIG. 3

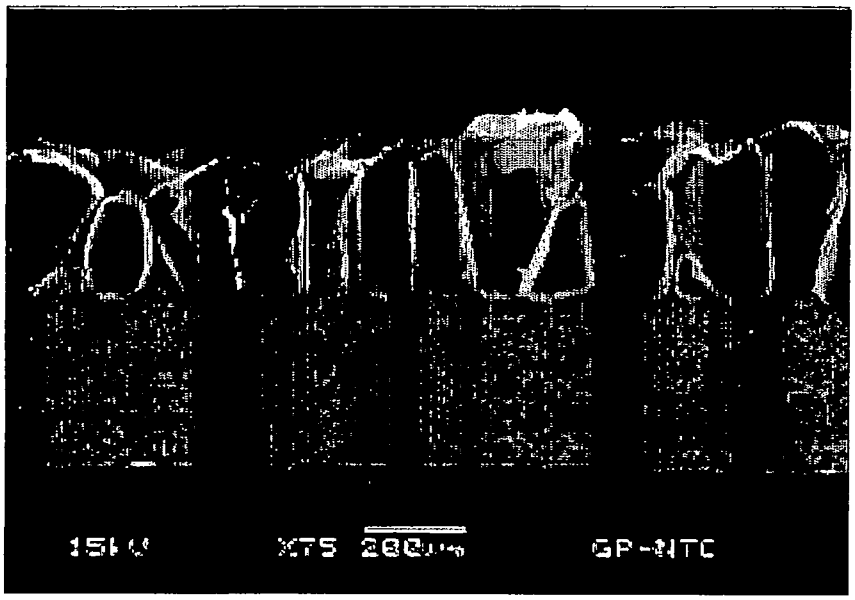


FIG. 4

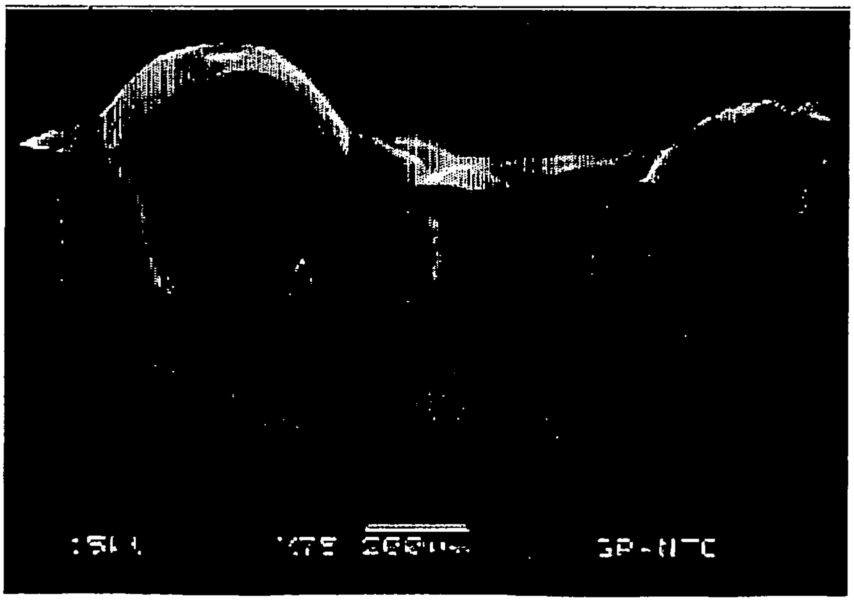

FIG. 5

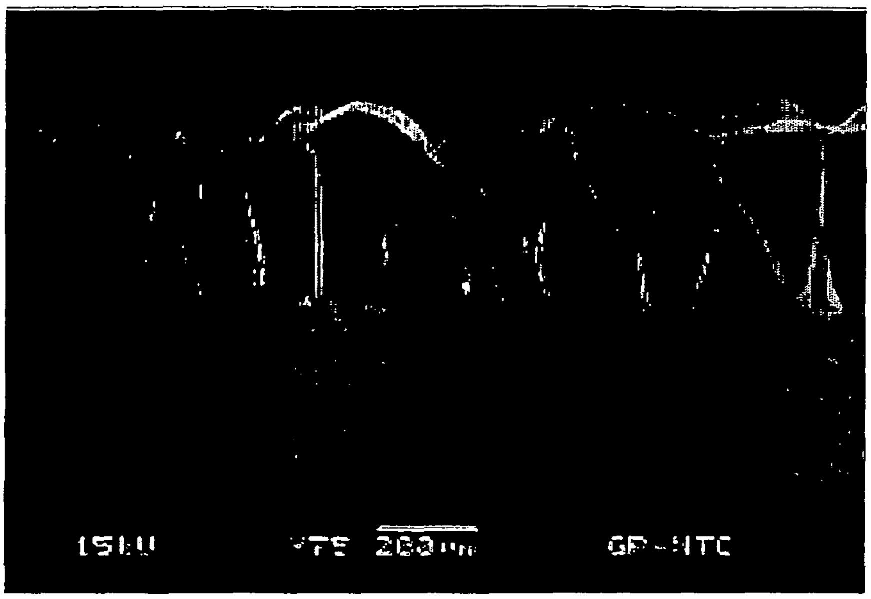

FIG. 6

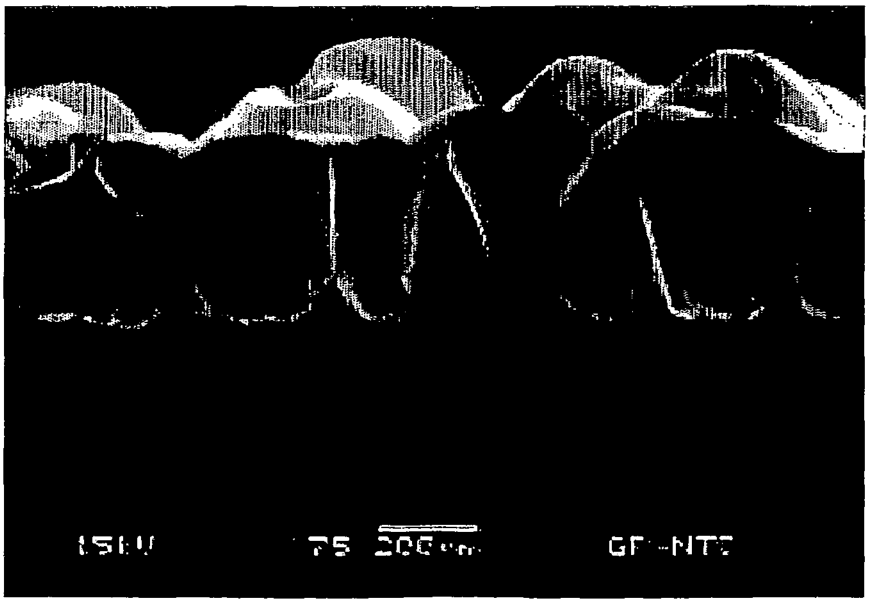

FIG. 7

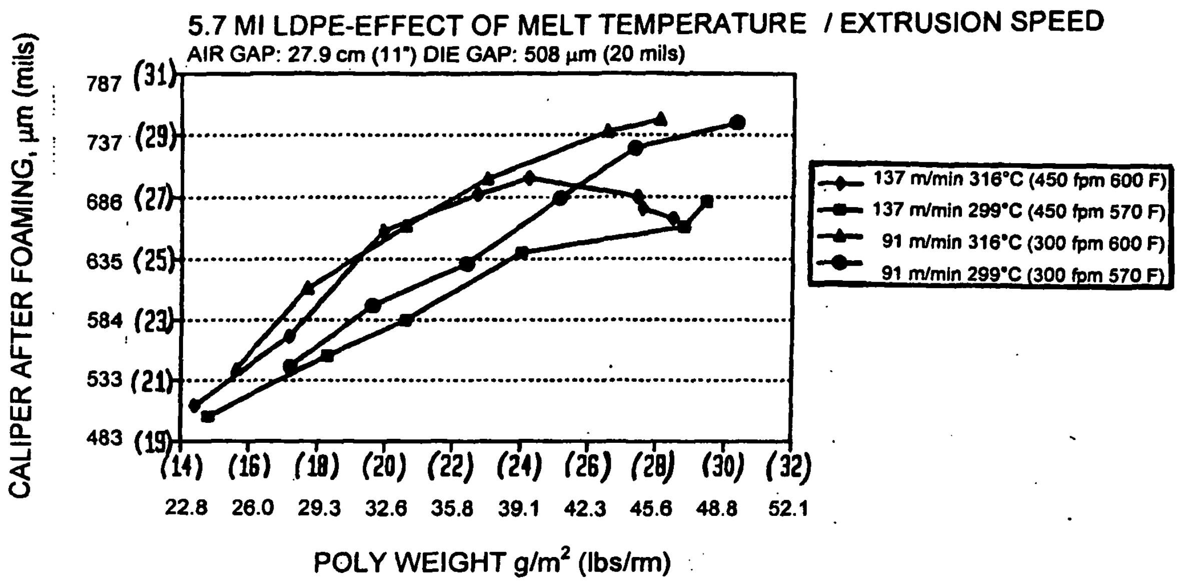
5.7 MI LDPE-EFFECT OF MELT TEMPERATURE / EXTRUSION SPEED
AIR GAP: 27.9 cm (11") DIE GAP: 508 µm (20 mils)
CALIPER AFTER FOAMING, µm (mils)
787 (31)
737 (29)
686 (27)
635 (25)
584 (23)
533 (21)
483 (19)
(14) (16) (18) (20) (22) (24) (26) (28) (30) (32)
22.8 26.0 29.3 32.6 35.8 39.1 42.3 45.6 48.8 52.1
POLY WEIGHT g/m² (lbs/rm)
137 m/min 316°C (450 fpm 600 F)
137 m/min 299°C (450 fpm 570 F)
91 m/min 316°C (300 fpm 600 F)
91 m/min 299°C (300 fpm 570 F)

FIG. 8

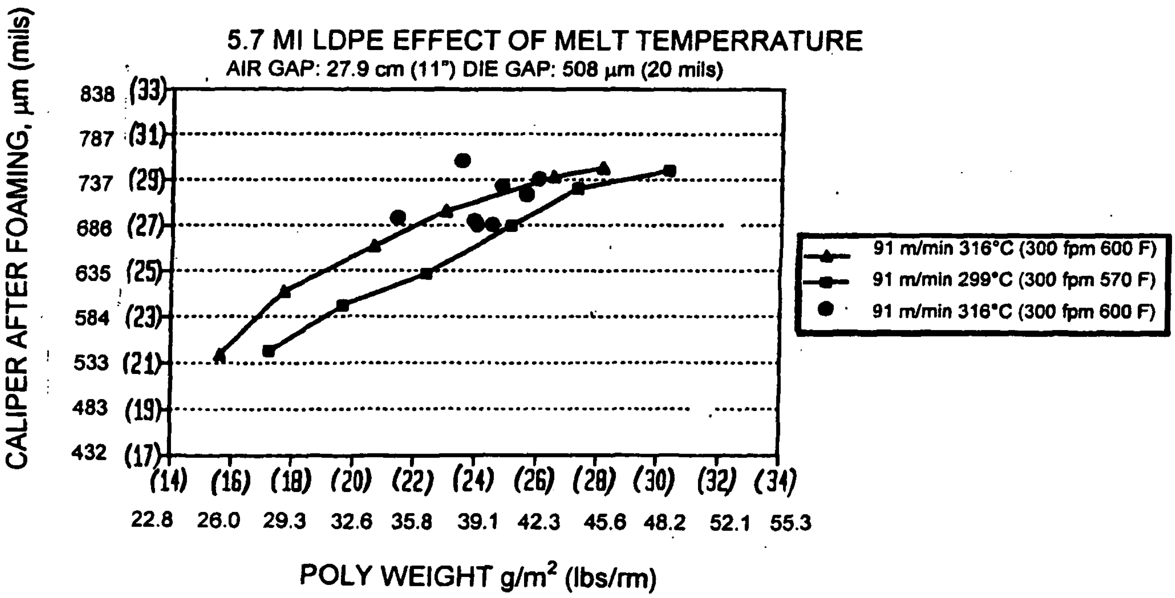
5.7 MI LDPE EFFECT OF MELT TEMPERRATURE
AIR GAP: 27.9 cm (11") DIE GAP: 508 µm (20 mils)
CALIPER AFTER FOAMING, µm (mils)
838 (33)
787 (31)
737 (29)
686 (27)
635 (25)
584 (23)
533 (21)
483 (19)
432 (17)
(14) (16) (18) (20) (22) (24) (26) (28) (30) (32) (34)
22.8 26.0 29.3 32.6 35.8 39.1 42.3 45.6 48.2 52.1 55.3
POLY WEIGHT g/m² (lbs/rm)
91 m/min 316°C (300 fpm 600 F)
91 m/min 299°C (300 fpm 570 F)
91 m/min 316°C (300 fpm 600 F)

FIG. 9

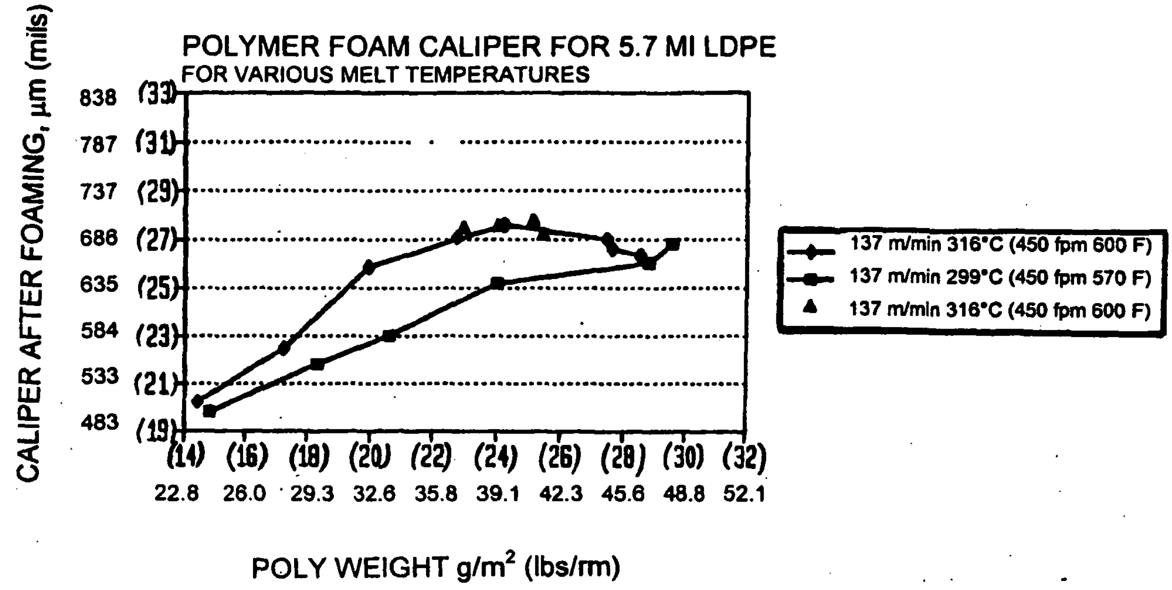
POLYMER FOAM CALIPER FOR 5.7 MI LDPE
FOR VARIOUS MELT TEMPERATURES
CALIPER AFTER FOAMING, µm (mils)
838 (33)
787 (31)
737 (29)
686 (27)
635 (25)
584 (23)
533 (21)
483 (19)
(14) (16) (18) (20) (22) (24) (26) (28) (30) (32)
22.8 26.0 29.3 32.6 35.8 39.1 42.3 45.6 48.8 52.1
POLY WEIGHT g/m2 (lbs/rm)
137 m/min 316°C (450 fpm 600 F)
137 m/min 299°C (450 fpm 570 F)
137 m/min 316°C (450 fpm 600 F)

FIG. 10

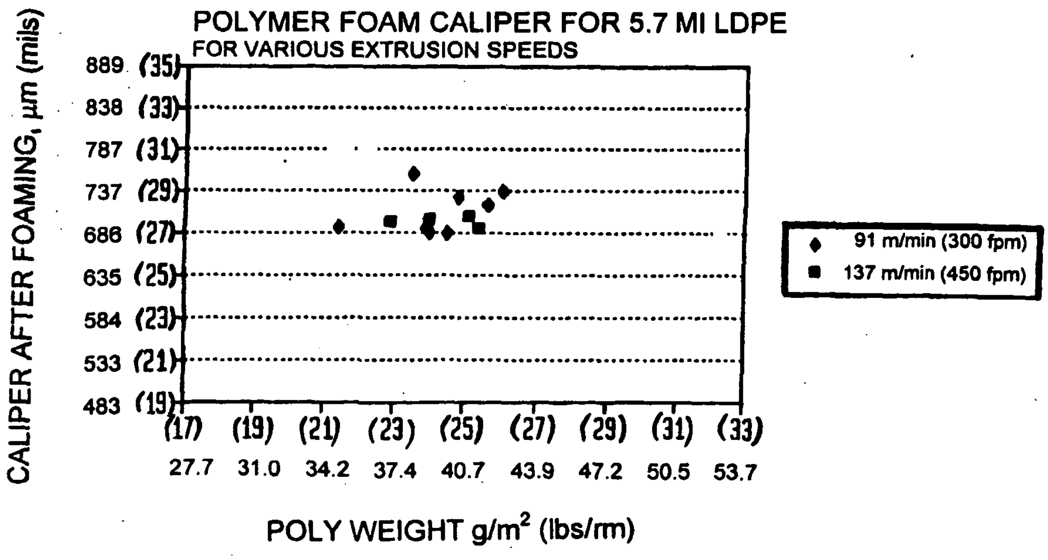
POLYMER FOAM CALIPER FOR 5.7 MI LDPE
FOR VARIOUS EXTRUSION SPEEDS
CALIPER AFTER FOAMING, µm (mils)
889 (35)
838 (33)
787 (31)
737 (29)
686 (27)
635 (25)
584 (23)
533 (21)
483 (19)
(17) (19) (21) (23) (25) (27) (29) (31) (33)
27.7 31.0 34.2 37.4 40.7 43.9 47.2 50.5 53.7
POLY WEIGHT g/m2 (lbs/rm)
91 m/min (300 fpm)
137 m/min (450 fpm)

FIG. 11

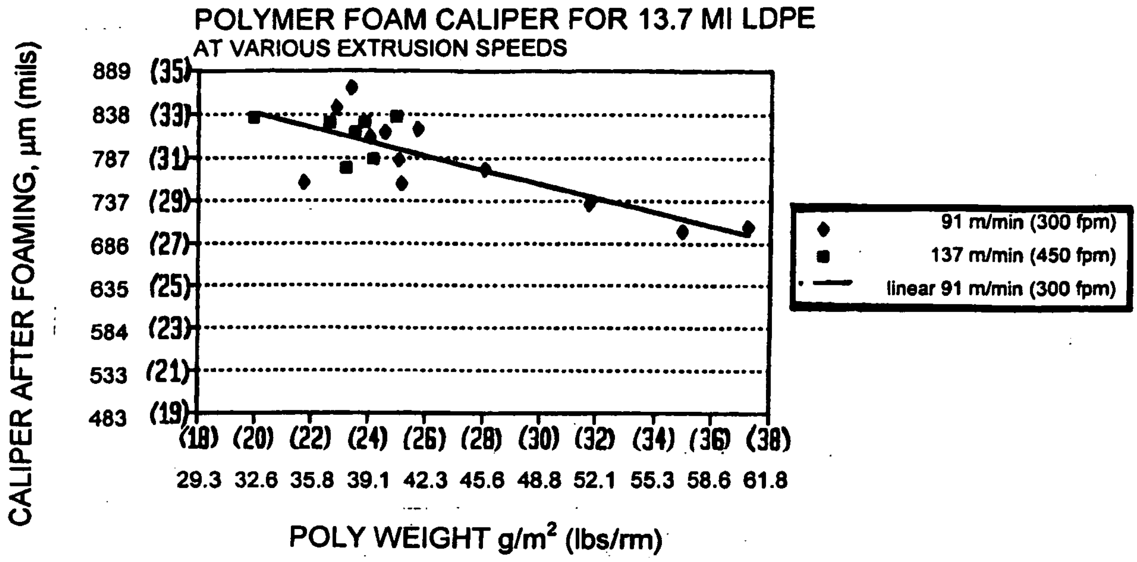
POLYMER FOAM CALIPER FOR 13.7 MI LDPE
AT VARIOUS EXTRUSION SPEEDS
CALIPER AFTER FOAMING, µm (mils)
889 (35)
838 (33)
787 (31)
737 (29)
686 (27)
635 (25)
584 (23)
533 (21)
483 (19)
(18) (20) (22) (24) (26) (28) (30) (32) (34) (36) (38)
29.3 32.6 35.8 39.1 42.3 45.6 48.8 52.1 55.3 58.6 61.8
POLY WEIGHT g/m² (lbs/rm)
91 m/min (300 fpm)
137 m/min (450 fpm)
linear 91 m/min (300 fpm)

FIG. 12

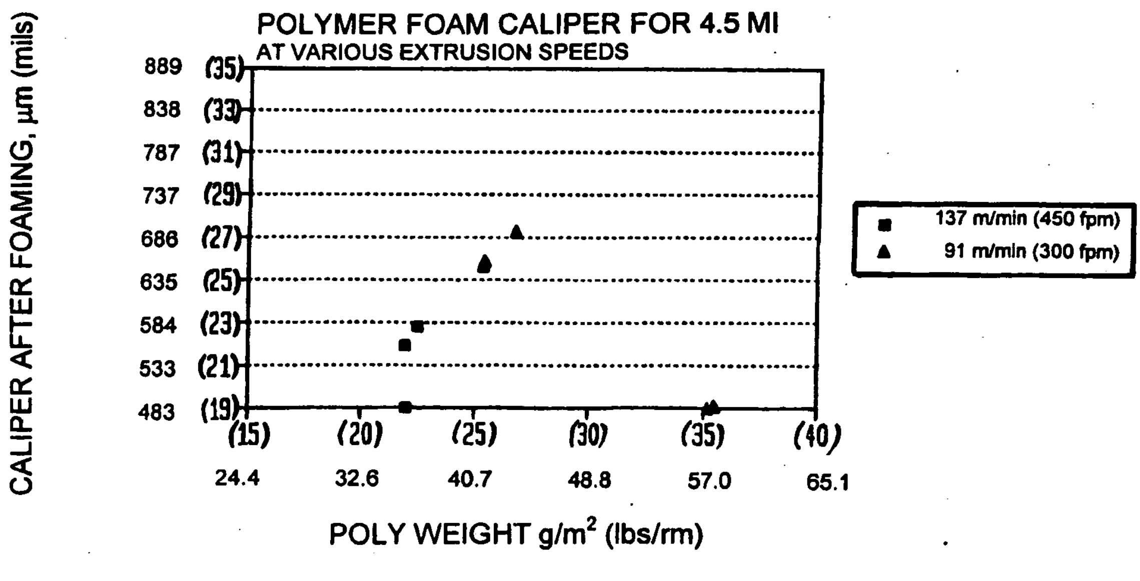
POLYMER FOAM CALIPER FOR 4.5 MI
AT VARIOUS EXTRUSION SPEEDS
CALIPER AFTER FOAMING, µm (mils)
889 (35)
838 (33)
787 (31)
737 (29)
686 (27)
635 (25)
584 (23)
533 (21)
483 (19)
(15) (20) (25) (30) (35) (40)
24.4 32.6 40.7 48.8 57.0 65.1
POLY WEIGHT g/m² (lbs/rm)
137 m/min (450 fpm)
91 m/min (300 fpm)

FIG. 13

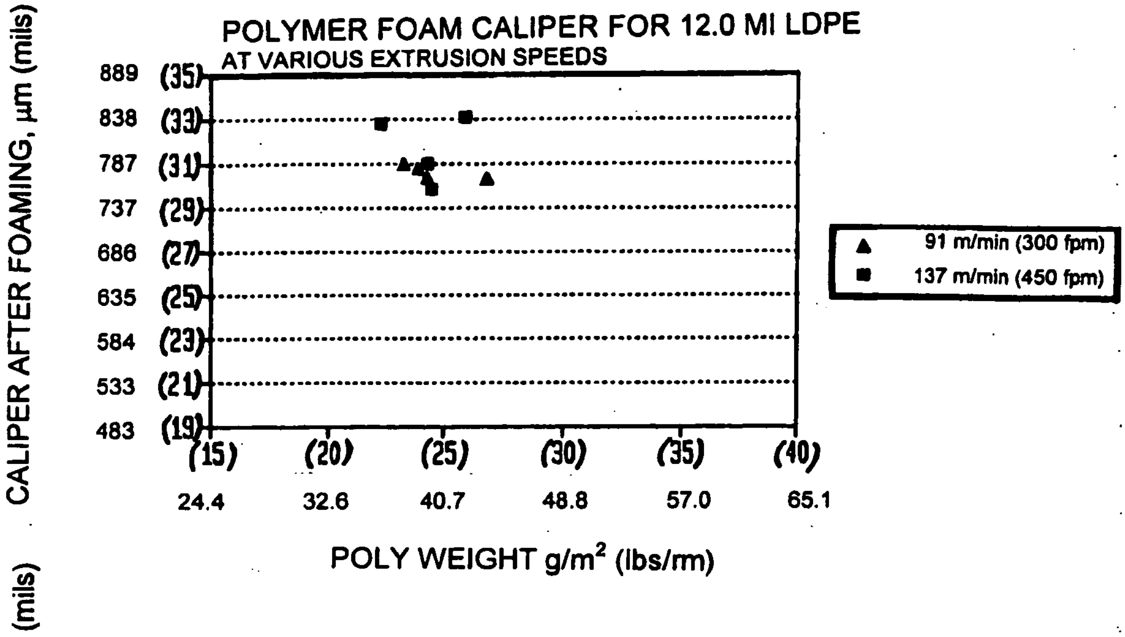
POLYMER FOAM CALIPER FOR 12.0 MI LDPE
AT VARIOUS EXTRUSION SPEEDS
CALIPER AFTER FOAMING, µm (mils)
889 (35)
838 (33)
787 (31)
737 (29)
686 (27)
635 (25)
584 (23)
533 (21)
483 (19)
(15) 24.4
(20) 32.6
(25) 40.7
(30) 48.8
(35) 57.0
(40) 65.1
POLY WEIGHT g/m² (lbs/rm)
91 m/min (300 fpm)
137 m/min (450 fpm)

FIG. 14

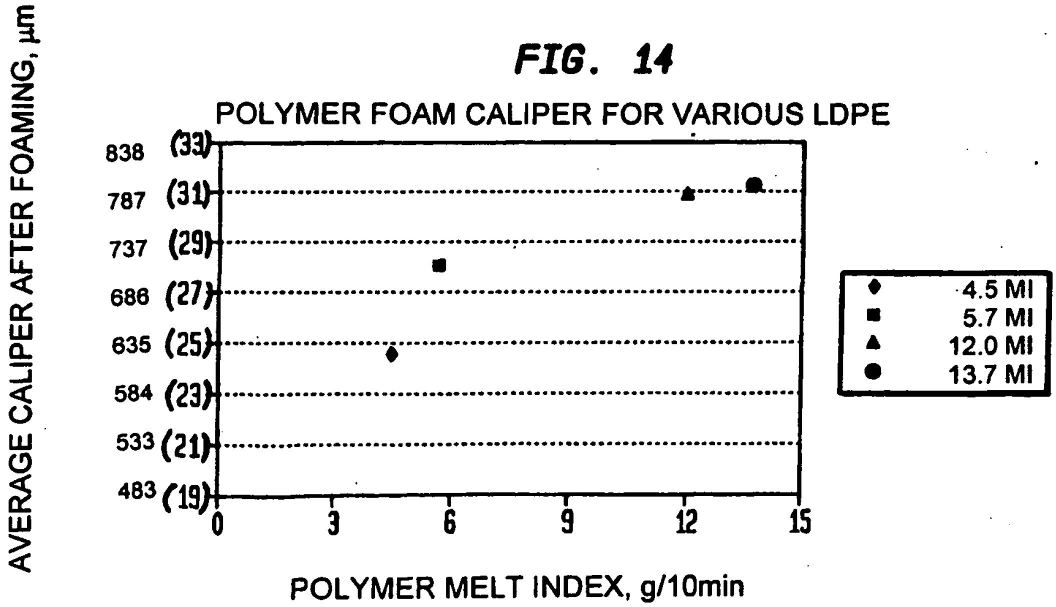
POLYMER FOAM CALIPER FOR VARIOUS LDPE
AVERAGE CALIPER AFTER FOAMING, µm (mils)
838 (33)
787 (31)
737 (29)
686 (27)
635 (25)
584 (23)
533 (21)
483 (19)
0
3
6
9
12
15
POLYMER MELT INDEX, g/10min
4.5 MI
5.7 MI
12.0 MI
13.7 MI

FIG. 15A

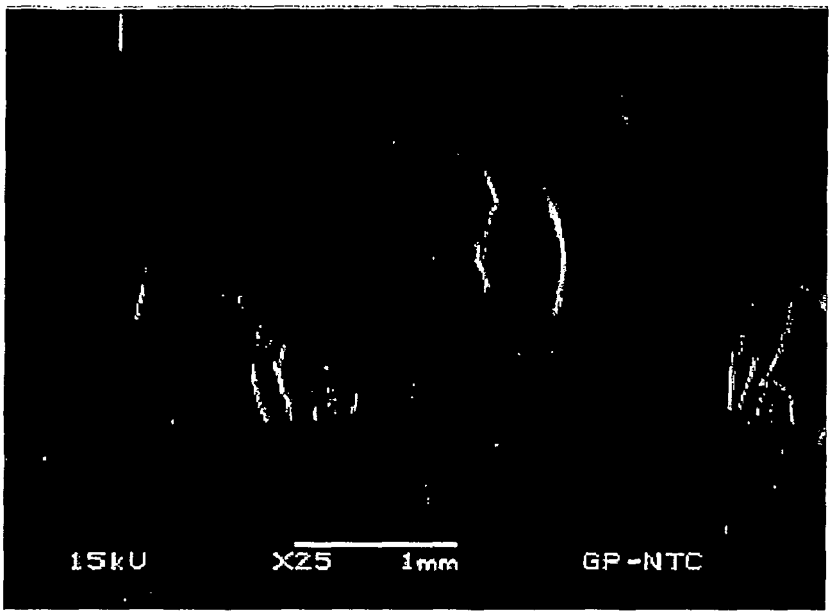


FIG. 15B

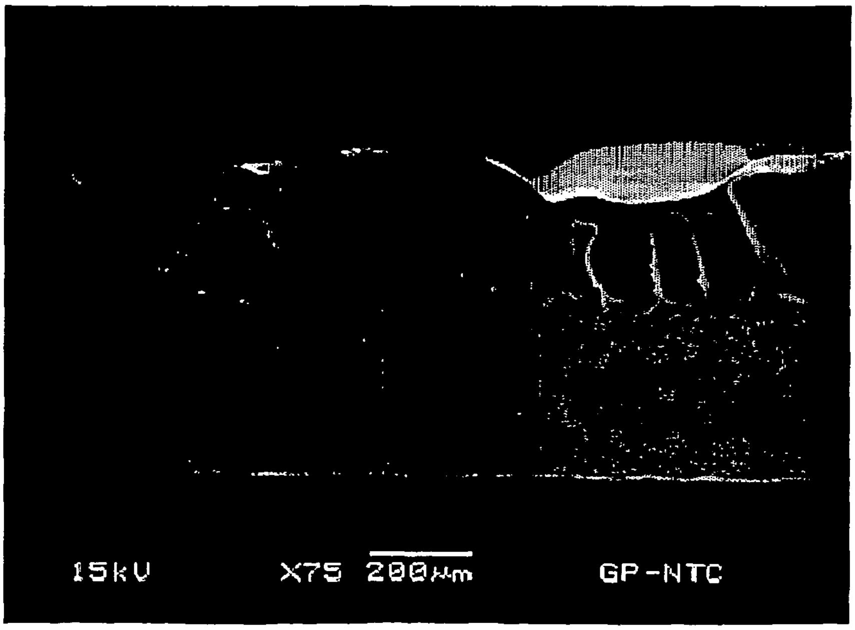

FIG. 16A

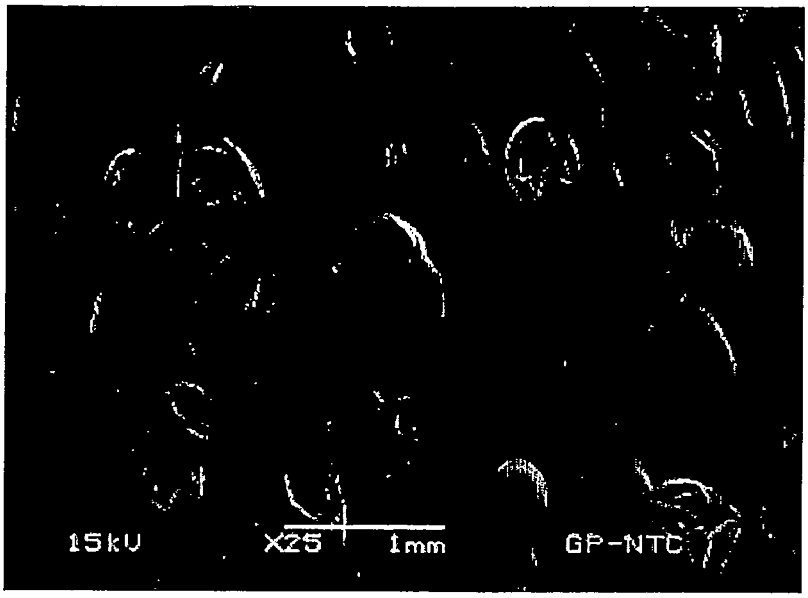


FIG. 16B

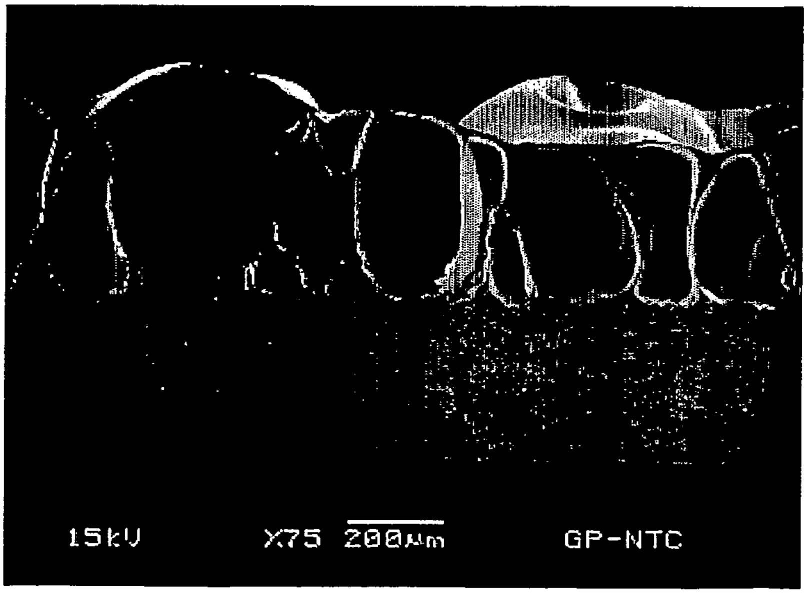

FIG. 17A

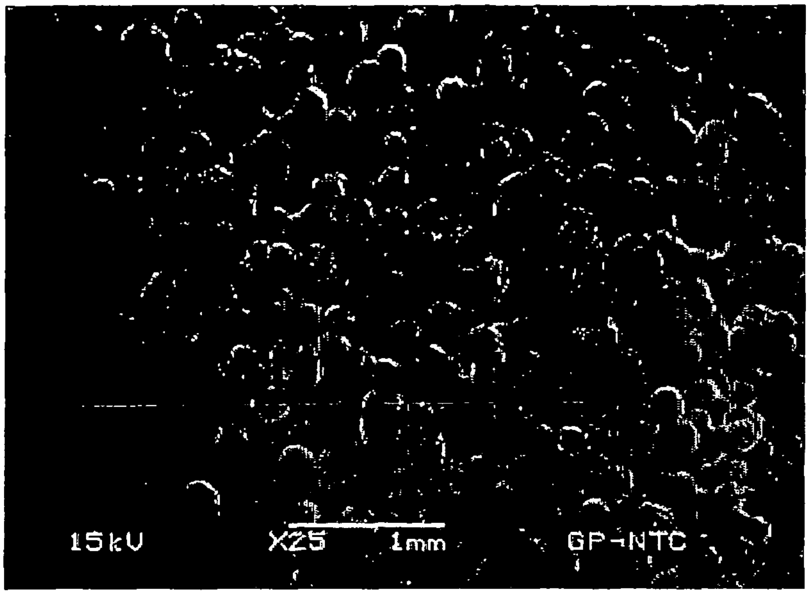


FIG. 17B

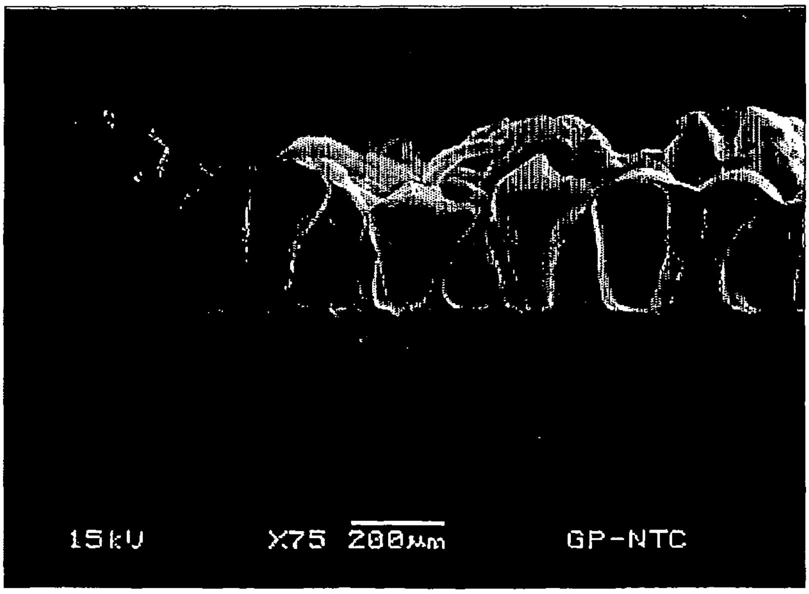

FIG. 18A

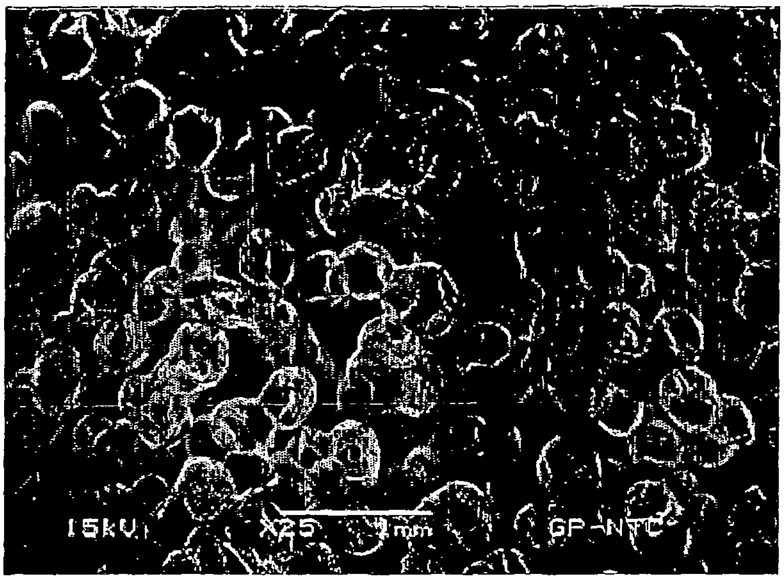


FIG. 18B

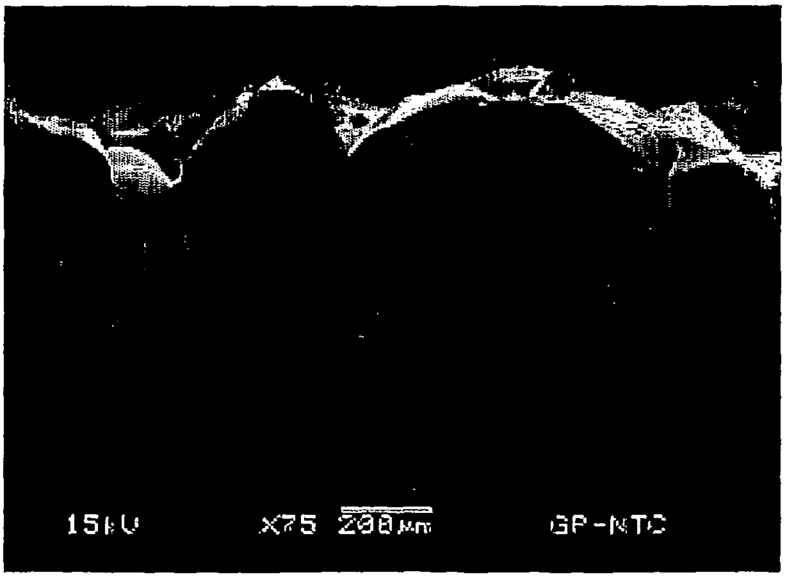

FIG. 19A

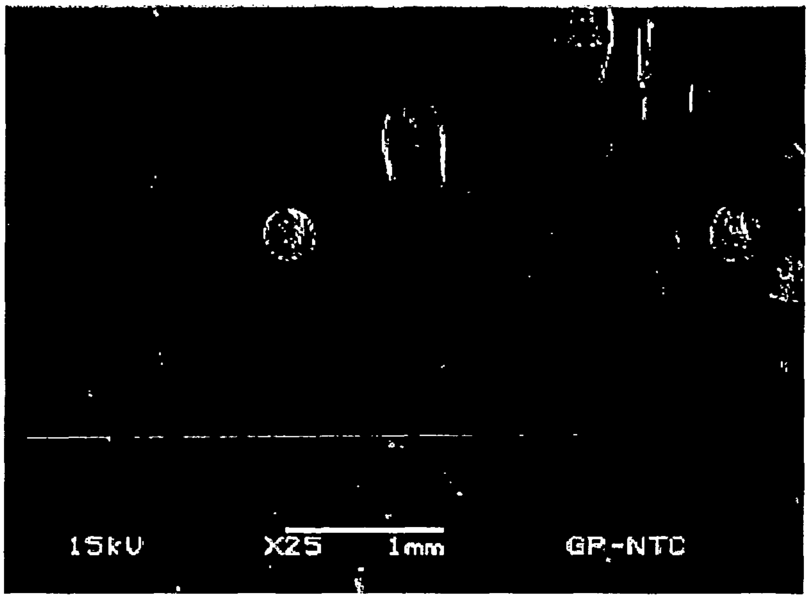


FIG. 19B

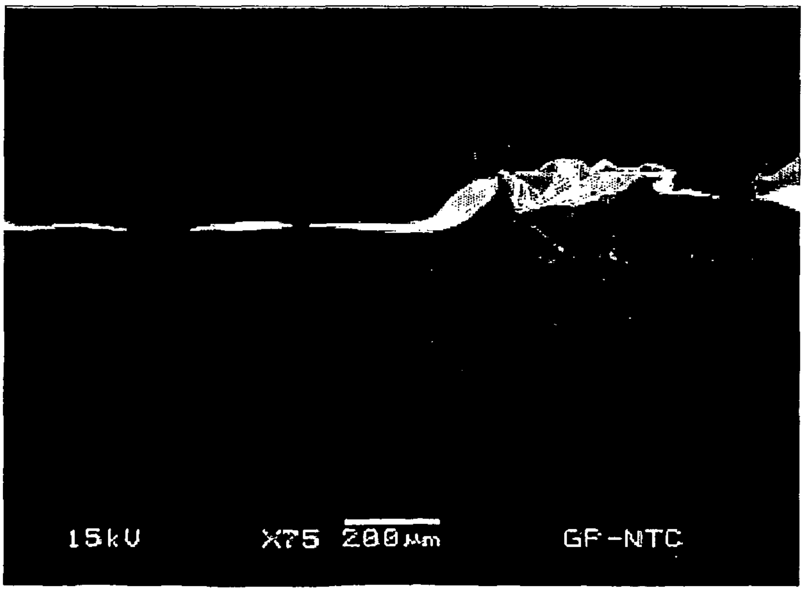

FIG. 20A

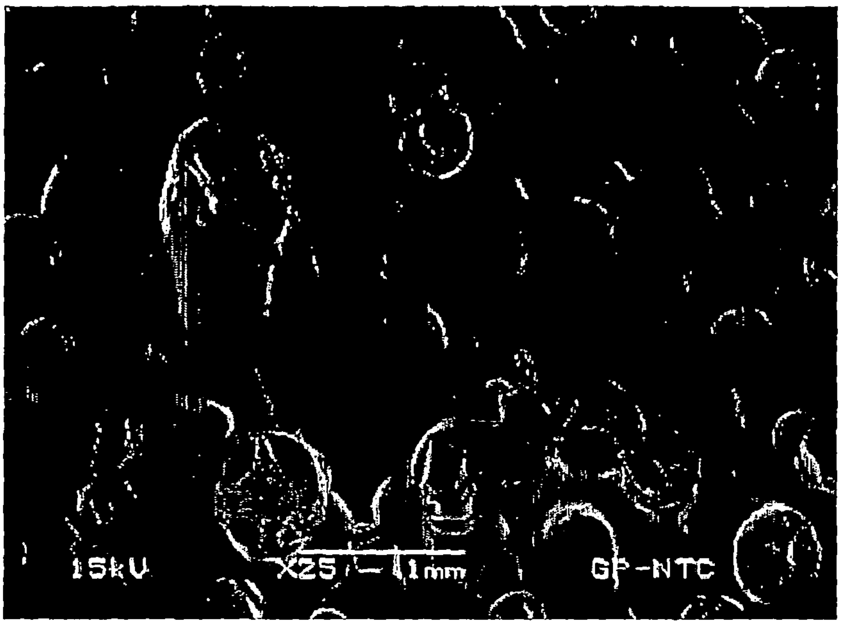


FIG. 20B

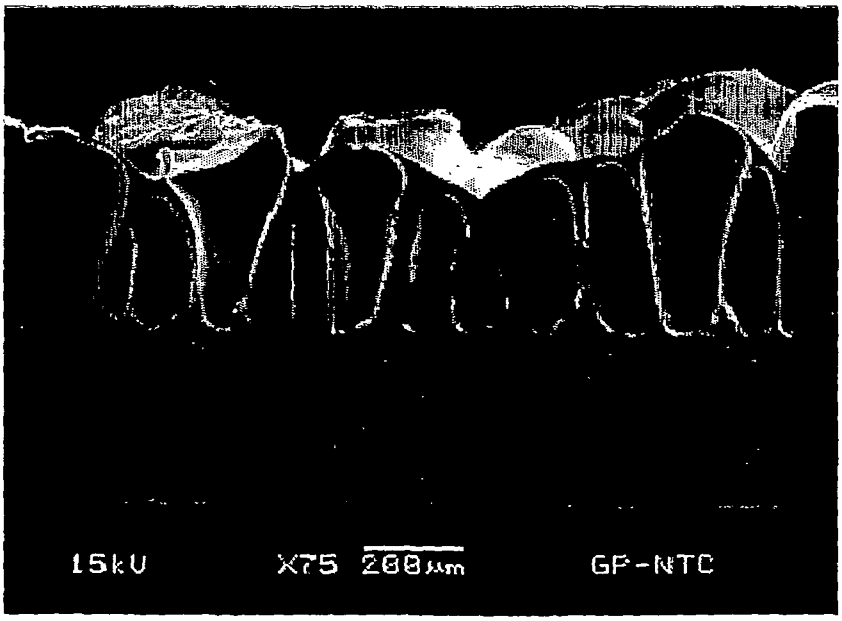

FIG. 21A

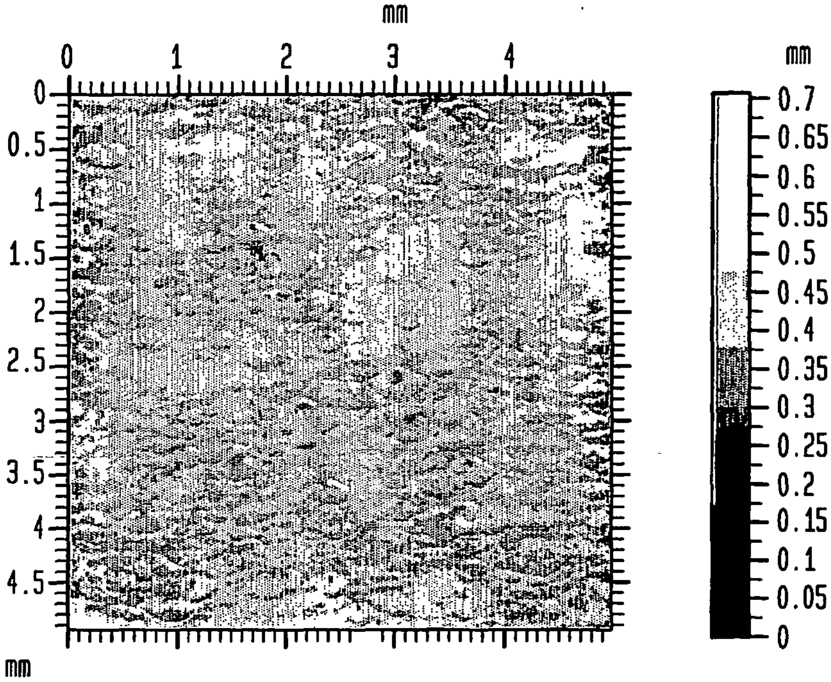


FIG. 21B

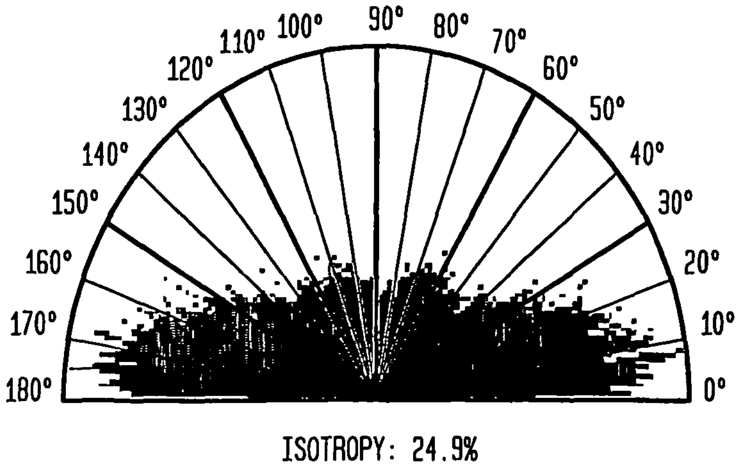

FIG. 22A

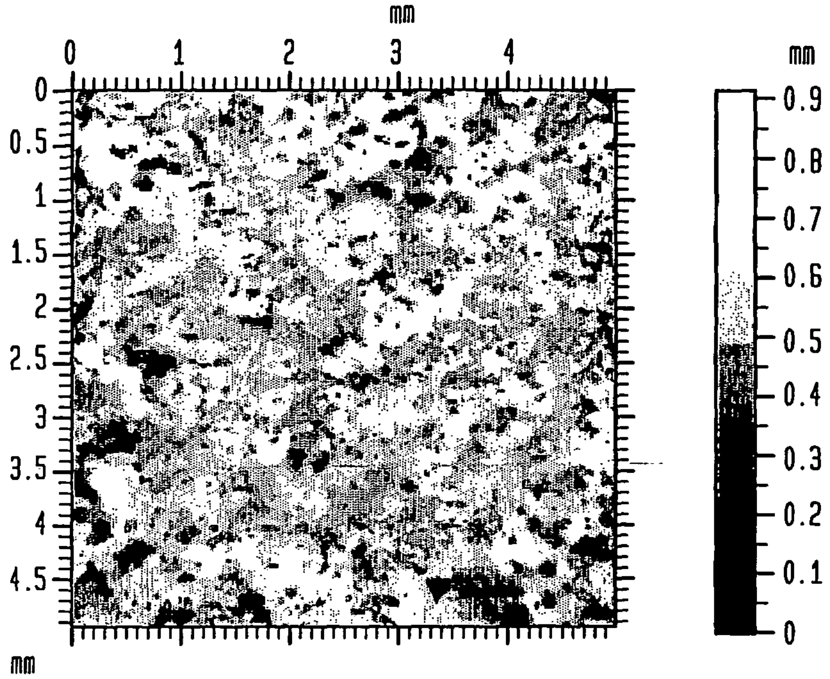


FIG. 22B

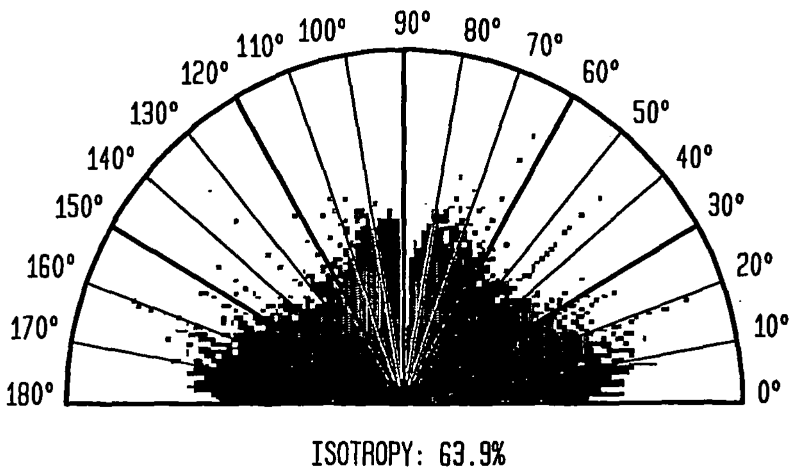

*Fig. 23*

**Pilot Plant Extrusion Trial**
**5.7 MI LDPE**

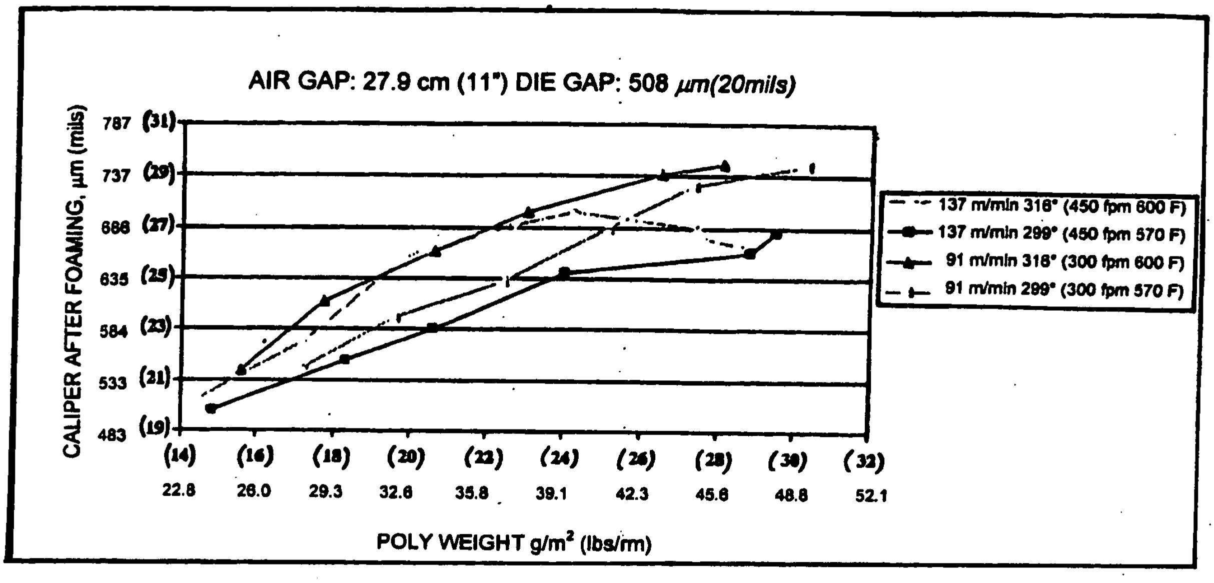

*Fig. 24*

**High Speed Extrusion Pilot Plant Trial**

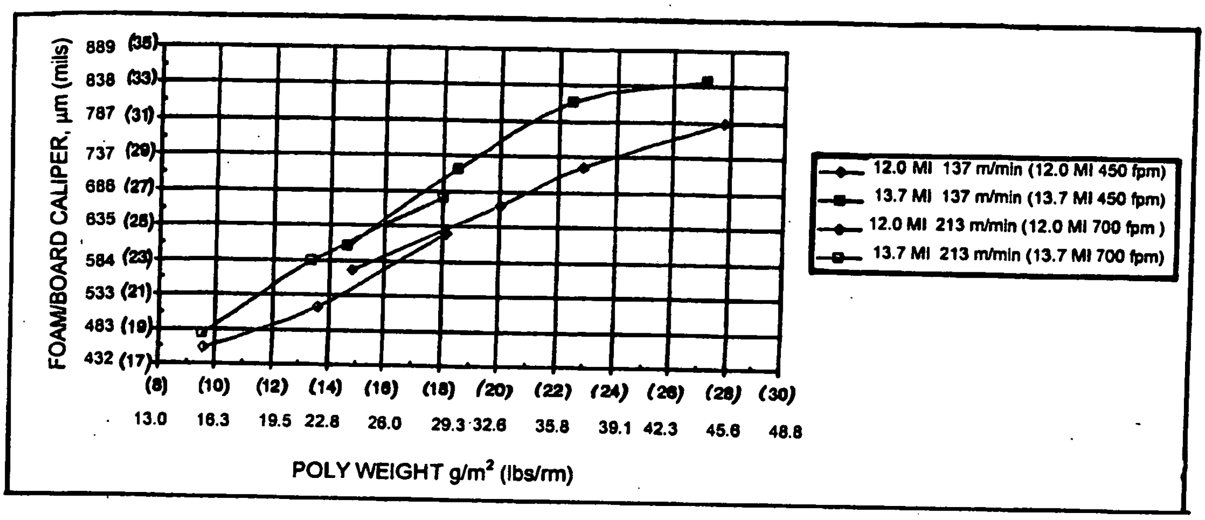

*Fig. 25*

**Oven temperature / Heating Time Effects on 5.7 MI LDPE Polymer Foam Caliper**

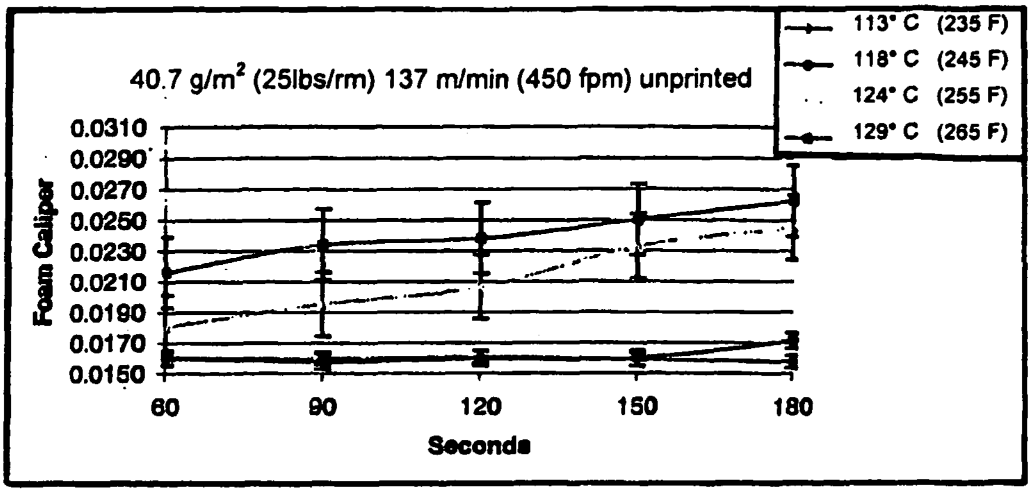

*Fig. 26*

**Temperature / Time Effects on 12.0 MI LDPE Polymer Foam Caliper**

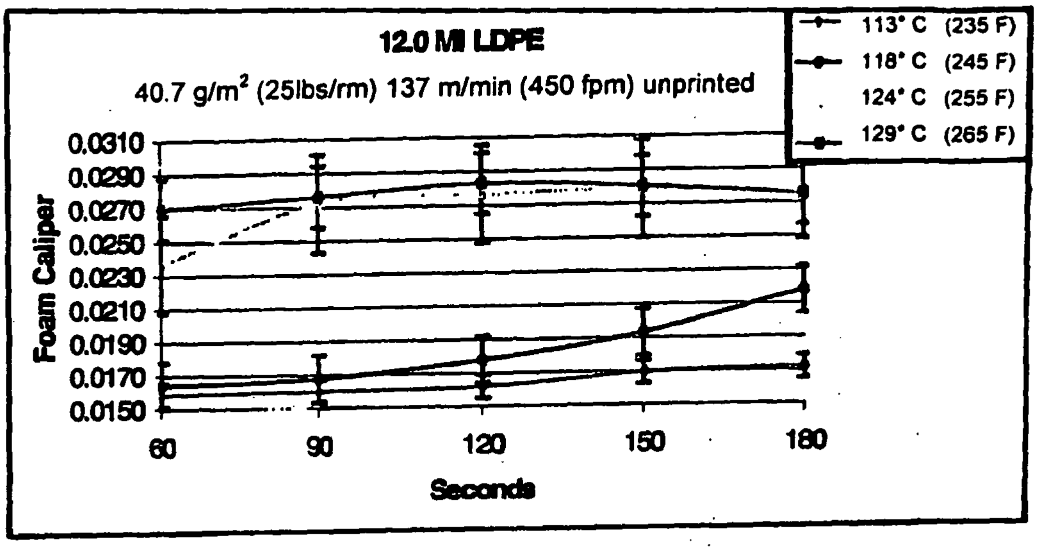

*Fig. 27*

**Temperature / Time Effects on 13.7 MI LDPE Polymer Foam Caliper**

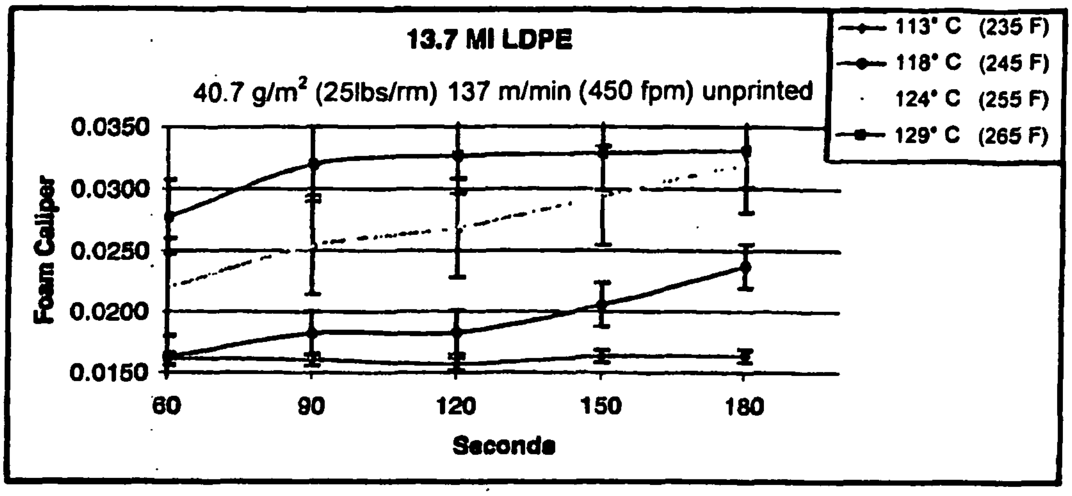

*Fig. 28*

**Foam caliper at high oven temperature – 5.7 MI LDPE**

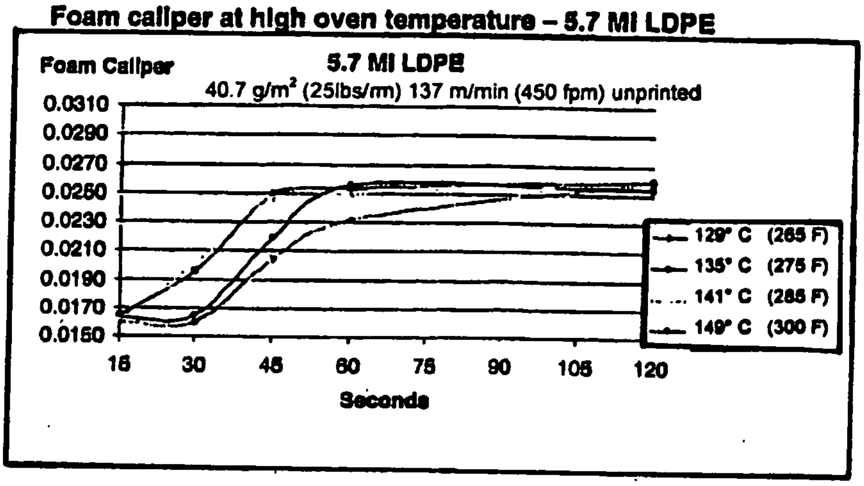

*Fig. 29*

**Foam Caliper at High Oven Temperature – 12.0 MI LDPE**

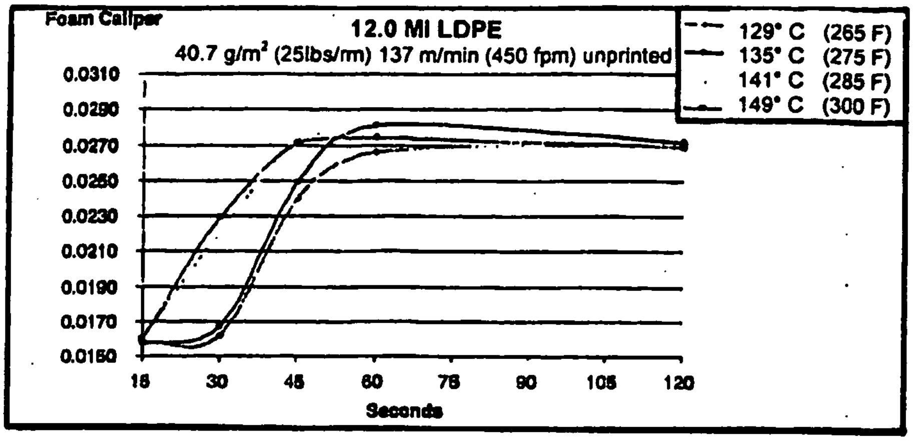

*Fig. 30*

**Foam Caliper at High Oven Temperature – 13.7 MI LDPE**

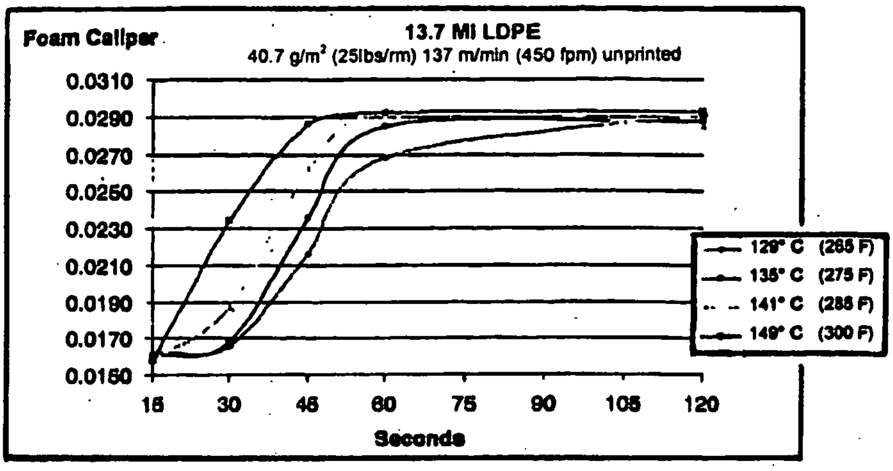

*Fig. 31*

**SEM Micrographs for 12.0 MI LDPE at Various Temperatures and Oven Residence Times**

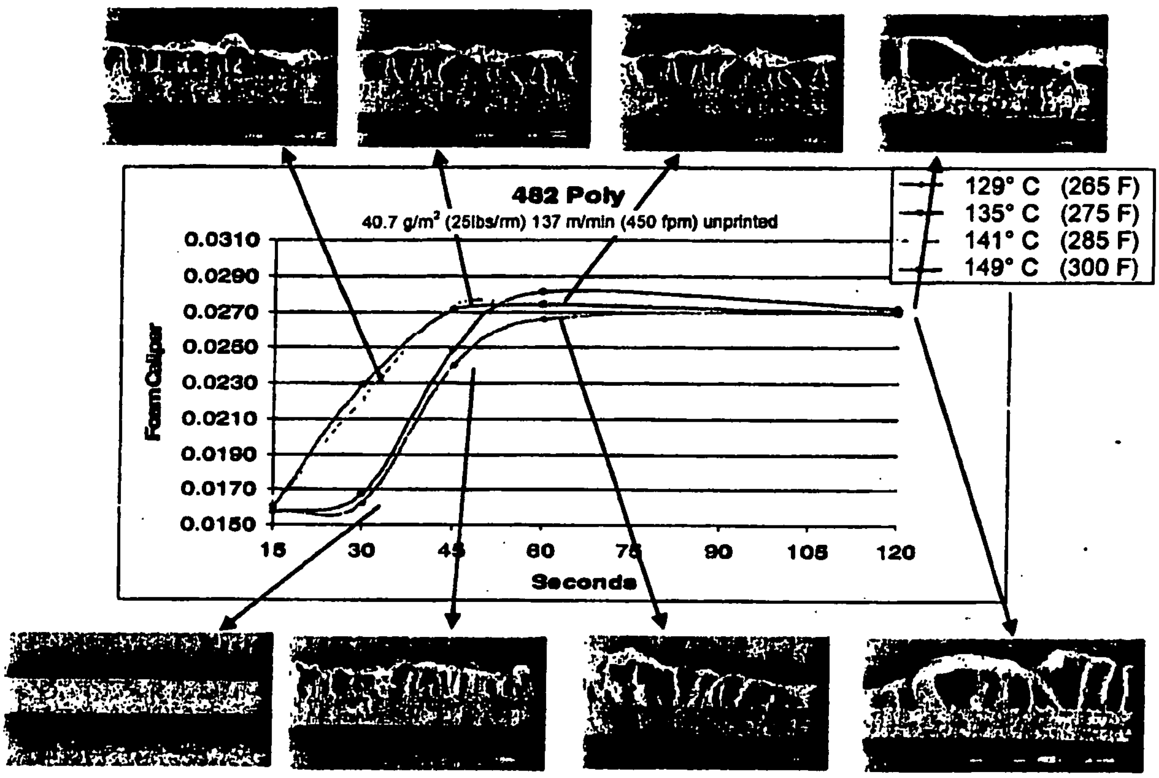

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 69140405 P
- US 60705605 P
- US 4435344 A, Iioka
- US 5993705 A, Grishchenko
- US 6328557 B, Grishchenko
- US 6142331 A
- US 5272236 A
- US 5278272 A
- US 5490631 A, Iioka
- US 5725916 A, Ishii
- US 5766709 A, Geddes
- US 5840139 A, Geddes
- US 6030476 A, Geddes
- US 6139665 A, Schmelzer
- US 6308883 B, Schmelzer
- US 6319590 B, Geddes
- US 6129653 A, Fredericks
- US 6416829 B, Breining
- US 6482481 B, Fredericks
- US 6565934 B, Fredericks
- US 6663927 B, Breining
- US 6676586 B, Breining
- US 6703090 B, Breining
- US 20040126517 A, Breining

### Non-patent literature cited in the description

- Kirk-Othmer Encyclopedia of Chemical Technology. Wiley, 1996, vol. 17, 19
- **Toft, N. ; Rigdahl, M.** *Influence of Extrusion Coating Conditions on Structure and Tensile Properties of Polyethylenes, International Journal of Polymeric materials,* 2004, vol. 53, 809-828